# EUROPEAN PATENT APPLICATION

(11) **EP 4 489 421 A1**
(43) Date of publication of application: **08.01.2025**
(21) Application number: 23759886.7
(22) Date of filing: 17.02.2023
(51) Int. Cl.: H04N 23/60

(54) **SIGNAL PROCESSING DEVICE, SIGNAL PROCESSING METHOD, DATA STRUCTURE, AND DATA MANUFACTURING METHOD**

(30) Priority: 28.02.2022 JP 2022029483
(71) Applicant: Sony Semiconductor Solutions Corporation, Atsugi-shi, Kanagawa 243-0014 (JP)
(72) Inventor: KAWASAKI, Ryohei, Atsugi-shi, Kanagawa 243-0014 (JP)
(74) Representative: MFG Patentanwälte Meyer-Wildhagen Meggle-Freund Gerhard PartG mbB
(86) International application number: PCT/JP2023/005754
(87) International publication number: WO 2023/162885

(57) **Abstract**

A signal processing apparatus is provided which adds AI processing functions to an imaging system without such functions while improving the degree of freedom of AI processing that can be implemented by the imaging system.

A signal processing apparatus according to the present technology includes an AI processing part configured to perform AI processing on an input image by using an AI model, an image processing part capable of selectively acquiring a different type of image as an image based on a captured image input from an outside, a control part configured to control settings of the image processing part on the basis of image designation data for designating an image to be obtained by the image processing part, and to control settings of the AI model for the AI processing part on the basis of AI model designation data for designating an AI model to be set to the AI processing part, and a transmission part configured to transmit information indicative of a result of the AI processing performed by the AI processing part to the outside.

## Description

### [Technical Field]

The present technology relates to a signal processing apparatus and a signal processing method for performing AI (Artificial Intelligence) processing on an input image by using an AI model, a data structure of data for use by the signal processing apparatus, and a data generation method for generating the data.

### [Background Art]

There exist technologies that perform processing using an AI (Artificial Intelligence) model (referred to as "AI processing" hereunder) such as DNN (Deep Neural Network), as disclosed in PTL 1 cited below.

### [Citation List]

### [Patent Literature]

[PTL 1]
JP-T-2019-509566

### [Summary]

### [Technical Problem]

A proposed idea in this context is that cameras may be equipped with AI processing functions. Specifically, for example, cameras may be given functions to perform image recognition processing on captured images by using an AI model.

For example, a system may be configured in which multiple AI processing function-equipped cameras are disposed as surveillance cameras, results of image recognition processing (e.g., a process of recognizing surveillance targets such as persons and vehicles) performed on images captured by the cameras are transmitted to a user's information processing apparatus, and the information processing apparatus analyzes movements of the surveillance targets and the like.

That each camera possesses the AI processing functions eliminates the need for the information processing apparatus to carry out the AI processing upon receipt of the captured images from the individual cameras in analyzing the surveillance targets. This helps reduce the processing load on the information processing apparatus.

Since it is not necessary for each camera to transmit the captured images to the information processing apparatus, the amount of data communication in implementing surveillance target analysis can also be reduced. Further, with no need to transmit the captured images, it is also possible to prevent privacy infringement on subjects in the images that may be leaked.

Consider for the moment a business that manages an imaging system equipped with AI processing functions such as the system outlined above. Specifically, this may be a business that manages AI processing function-equipped imaging systems such as those marketing AI models designed to implement AI processing functions or offering services for updating AI models.

In working out this kind of business, it is desirable to acquire an increasing number of imaging system owners as clients in order to boost sales. In this case, it will be difficult to ask the clients to newly introduce the AI processing function-equipped imaging system due to high impact cost. Meanwhile, there exist a sizable number of owners of imaging systems with no AI processing functions. If there is a way to add the AI processing functions to such imaging systems devoid of the AI processing functions, it will be easier to increase the number of the clients, which will be a business advantage.

The present technology has been devised in view of the above circumstances, and aims to implement a signal processing apparatus that can add AI processing functions to an imaging system without such functions and thereby to achieve an increased degree of freedom in AI processing that can be implemented in the imaging system.

### [Solution to Problem]

According to the present technology, there is provided a signal processing apparatus including an AI processing part configured to perform AI processing on an input image by using an AI model, an image processing part capable of selectively acquiring a different type of image as an image based on a captured image input from an outside, a control part configured to control settings of the image processing part on the basis of image designation data for designating an image to be obtained by the image processing part, and to control settings of the AI model for the AI processing part on the basis of AI model designation data for designating an AI model to be set to the AI processing part, and a transmission part configured to transmit information indicative of a result of the AI processing performed by the AI processing part to the outside.

In the signal processing apparatus configured as outlined above according to the present technology, the AI processing part performs the AI processing on the captured image input from the outside. The transmission part transmits the information indicative of the result of the AI processing to the outside. The signal processing apparatus according to the present technology thus enables an imaging system with no AI processing functions regarding captured images to function as an imaging system having the AI processing functions. As a result, the signal processing apparatus configured as outlined above makes it possible to selectively set the type of AI processing to be executed by the AI processing part, on the basis of the AI model designation data. Also, by designation based on the image designation data, the signal processing apparatus enables the AI processing part to receive input of an appropriate type of image corresponding to input image conditions assumed by the AI processing to be carried out.

According to the present technology, there is provided a signal processing method for execution by a signal processing apparatus including an AI processing part configured to perform AI processing on an input image by using an AI model, an image processing part capable of selectively acquiring a different type of image as an image based on a captured image input from an outside, and a transmission part configured to transmit information indicative of a result of the AI processing performed by the AI processing part to the outside, the signal processing method including causing the signal processing apparatus to control settings of the image processing part on the basis of image designation data for designating an image to be obtained by the image processing part, and to control settings of the AI model for the AI processing part on the basis of AI model designation data for designating an AI model to be set to the AI processing part.

Such a signal processing method implements the above-described signal processing apparatus according to the present technology.

According to the present technology, there is provided a data structure for use by a signal processing apparatus including an AI processing part configured to perform AI processing on an input image by using an AI model, an image processing part capable of selectively acquiring a different type of image as an image based on a captured image input from an outside, and a transmission part configured to transmit information indicative of a result of the AI processing performed by the AI processing part to the outside, the data structure including image designation data for designating an image to be obtained by the image processing part and AI model designation data for designating an AI model to be set to the AI processing part. The signal processing apparatus uses the data structure in controlling settings of the image processing part on the basis of the image designation data and in controlling settings of the AI model for the AI processing part on the basis of the AI model designation data.

Using data having the above structure makes it possible for the above-described signal processing apparatus according to the present technology to perform its processing.

According to the present technology, there is provided a data generation method for generating data for use by a signal processing apparatus including an AI processing part configured to perform AI processing on an input image by using an AI model, an image processing part capable of selectively acquiring a different type of image as an image based on a captured image input from an outside, and a transmission part configured to transmit information indicative of a result of the AI processing performed by the AI processing part to the outside, the data including image designation data for designating an image to be obtained by the image processing part and AI model designation data for designating an AI model to be set to the AI processing part.

Such a data generation method permits generation of data for allowing the above-described signal processing apparatus according to the present technology to perform its processing.

According to the present technology, there is provided another signal processing apparatus including an image processing part configured to perform signal processing on a captured image, an AI processing part configured to perform AI processing using an AI model on the captured image processed by the image processing part, a reception part configured to receive from a server apparatus image designation data for designating contents of the processing performed by the image processing part and AI model designation data for designating an AI model to be set to the AI processing part, a control part configured to control settings of the AI model for the AI processing part on the basis of the AI model designation data and to control settings of the image processing part on the basis of the image designation data, and a transmission part configured to transmit information indicative of a result of the AI processing performed by the AI processing part to an external imaging apparatus.

The signal processing apparatus configured as outlined above also enables an imaging apparatus with no AI processing functions to function as an imaging apparatus having the AI processing functions. Further, the signal processing apparatus makes it possible to selectively set the type of AI processing to be performed by the AI processing part, on the basis of the AI model designation data. Also, by designation based on the image designation data, the signal processing apparatus enables the AI processing part to receive input of an appropriate type of image corresponding to input image conditions assumed by the AI processing to be carried out.

According to the present technology, there is provided a further signal processing apparatus including a first communication part capable of communicating with an external imaging apparatus, a second communication part capable of communicating with an external server apparatus, and an AI processing part configured to perform AI processing using an AI model. A captured image is received from the imaging apparatus via the first communication part, and the AI model is received from the server apparatus via the second communication part. The AI processing part performs the AI processing on the received captured image by using the received AI model, and information indicative of a result of the AI processing performed by the AI processing part is transmitted to the imaging apparatus via the first communication part.

This signal processing apparatus enables an imaging apparatus with no AI processing functions to function as an imaging apparatus having the AI processing functions. Further, the AI processing functions in this case can be switched from one function to another depending on the AI model that the server apparatus causes the signal processing apparatus to receive.

### [Brief Description of Drawings]

[FIG. 1]

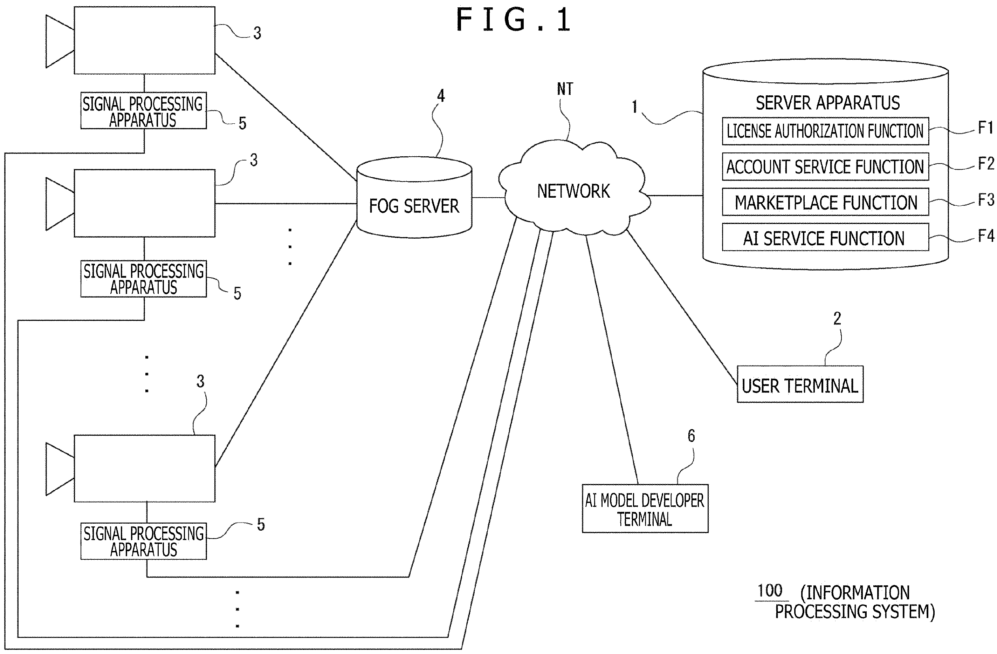

   FIG. 1 is a block diagram depicting an exemplary overall configuration of an information processing system as a first embodiment.
[FIG. 2]

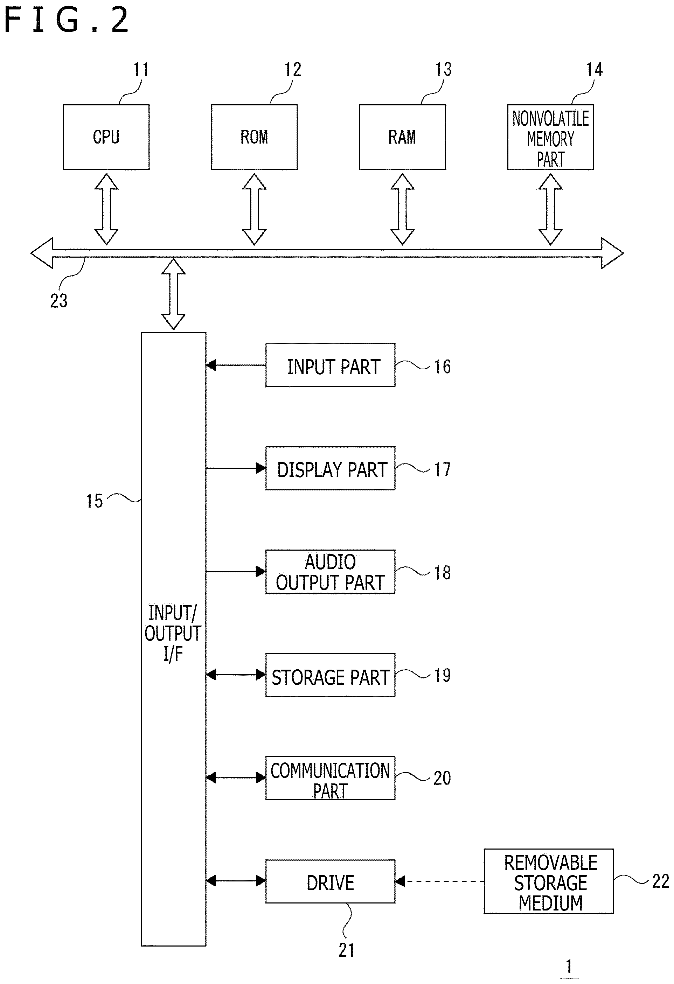

   FIG. 2 is a block diagram depicting an exemplary hardware configuration of an information processing apparatus included in the information processing system as the embodiment.
[FIG. 3]

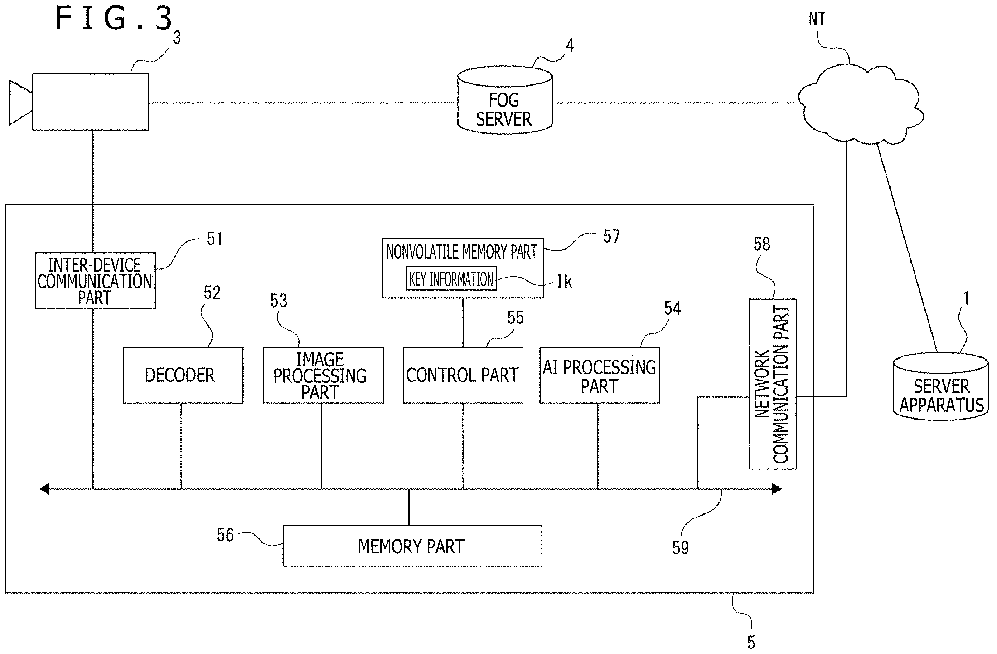

   FIG. 3 is a view for explaining an exemplary configuration of a signal processing apparatus as the first embodiment.
[FIG. 4]

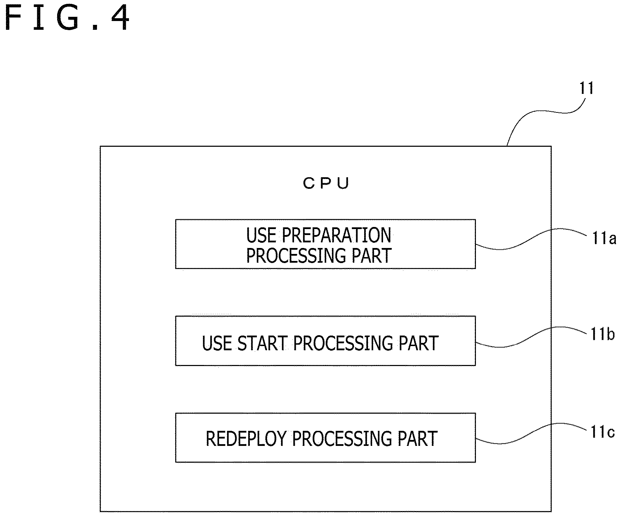

   FIG. 4 is a functional block diagram for explaining various functions retained by a server apparatus in the embodiment.
[FIG. 5]

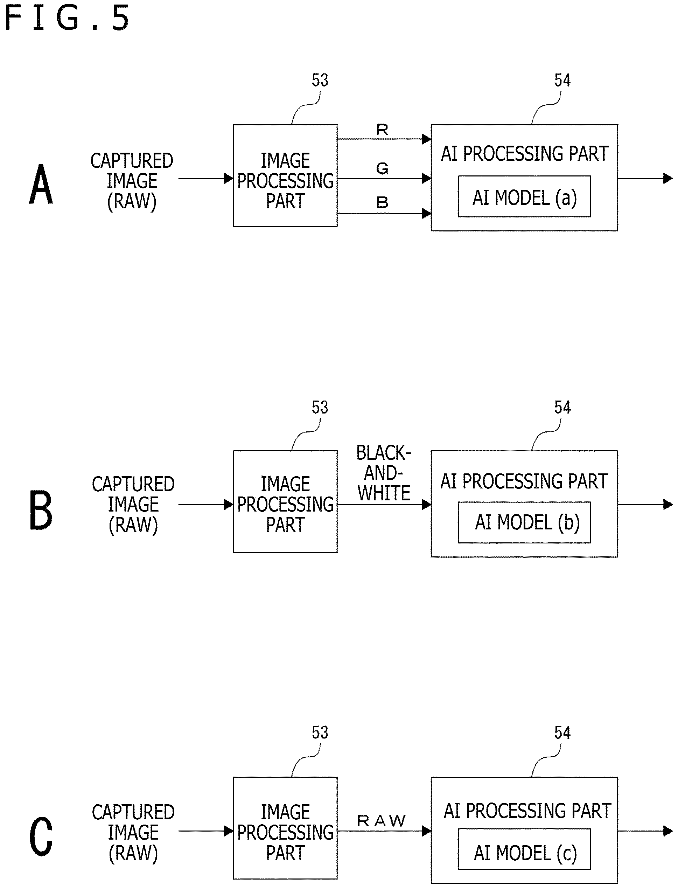

   FIG. 5 is an explanatory view regarding input image conditions for AI models in the embodiment.
[FIG. 6]

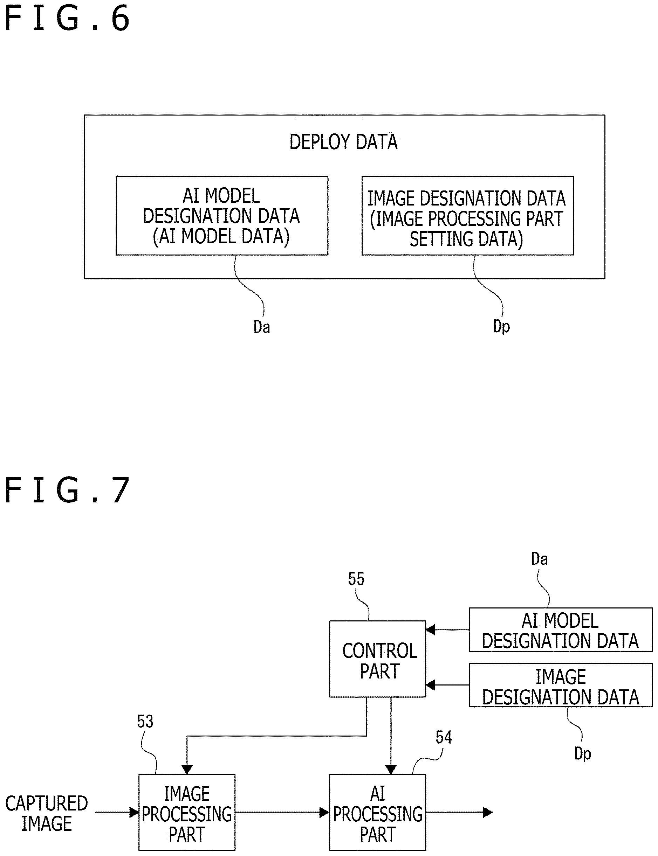

   FIG. 6 is a schematic view depicting data to be deployed to the signal processing apparatus in the embodiment.
[FIG. 7]
   FIG. 7 is a schematic view indicating setting controls of an image processing part and an AI processing part based on image designation data and AI model designation data.
[FIG. 8]

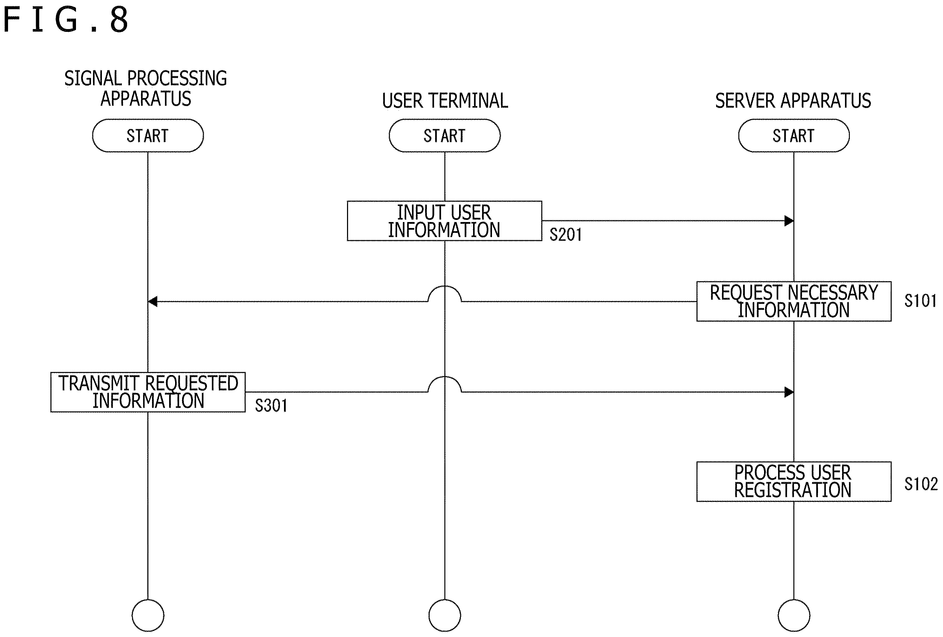

   FIG. 8 is a flowchart of processing performed upon registration of a user account with the information processing system as the embodiment.
[FIG. 9]

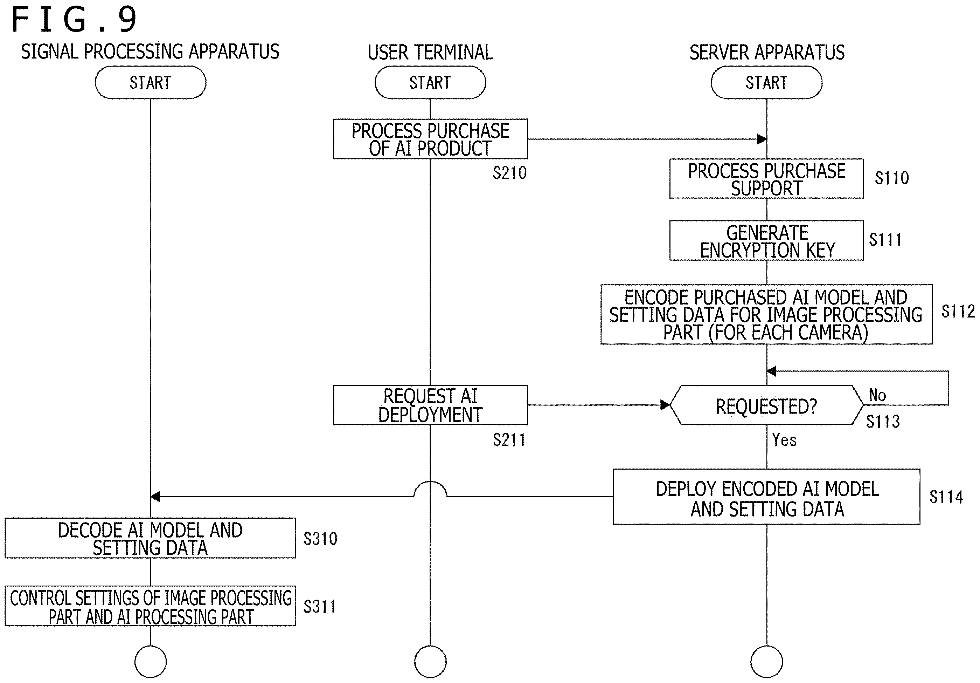

   FIG. 9 is a flowchart of processing ranging from purchase of an AI model to its deployment in the information processing system as the embodiment.
[FIG. 10]

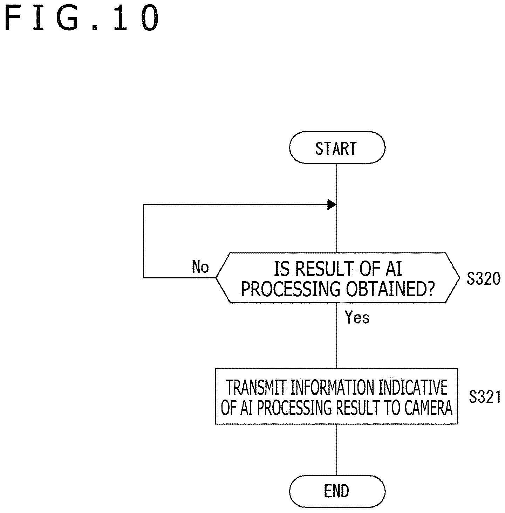

   FIG. 10 is a flowchart of exemplary processing of returning information indicative of the result of AI processing to a camera.
[FIG. 11]

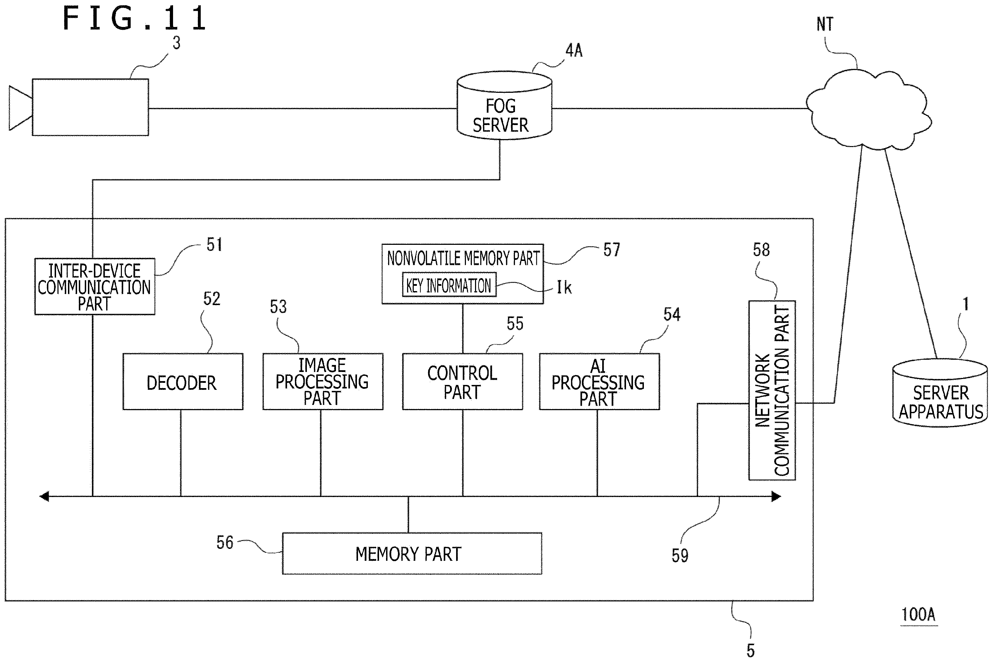

   FIG. 11 is a view for explaining an exemplary configuration of an information processing system as a second embodiment.
[FIG. 12]

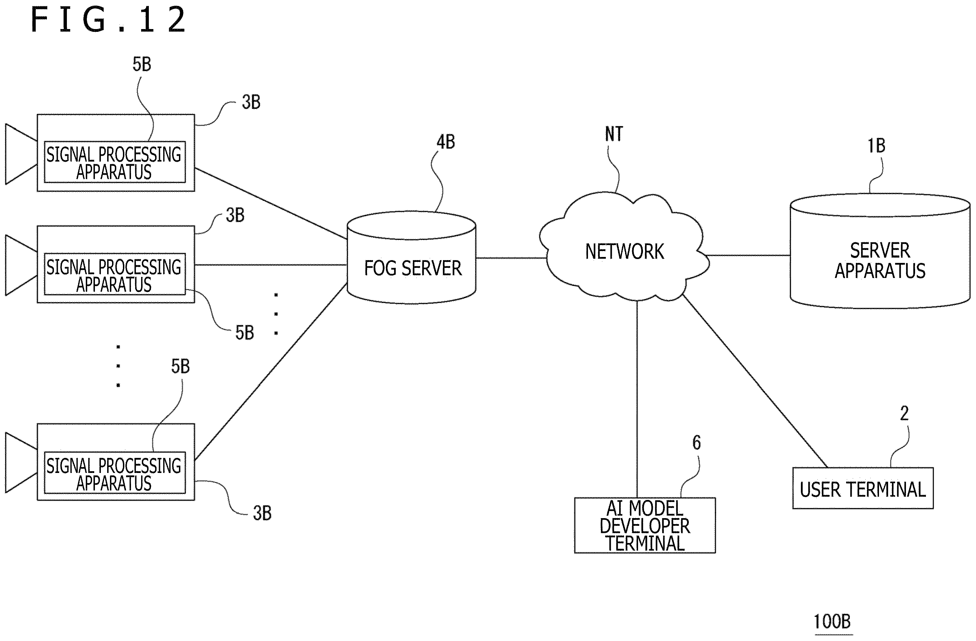

   FIG. 12 is a block diagram depicting an exemplary overall configuration of an information processing system as a third embodiment.
[FIG. 13]

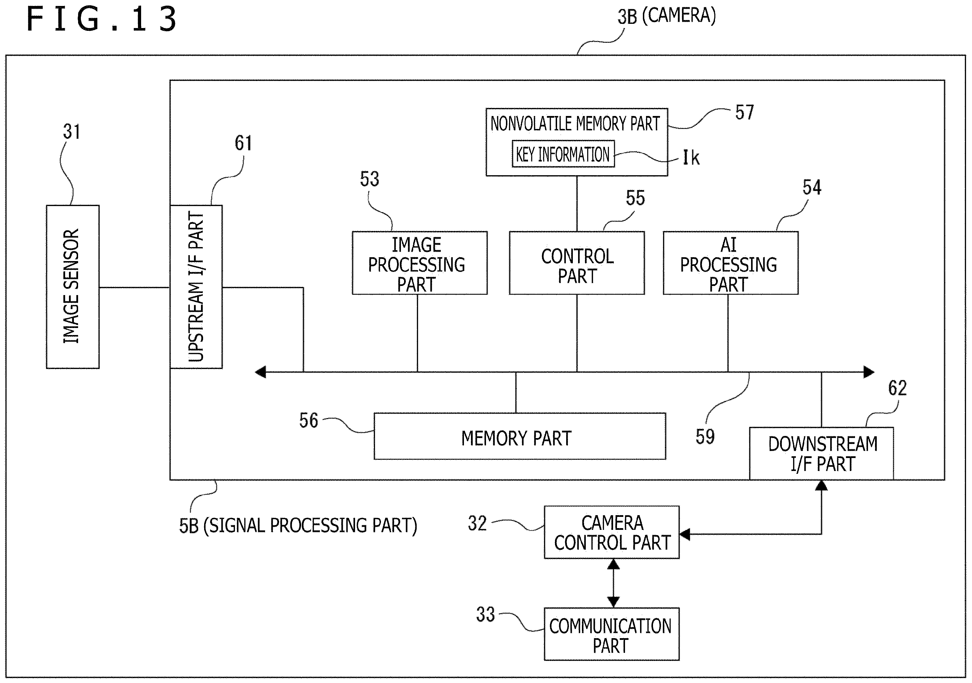

   FIG. 13 is a block diagram depicting an exemplary internal configuration of a camera disposed in the information processing system as the third embodiment.
[FIG. 14]

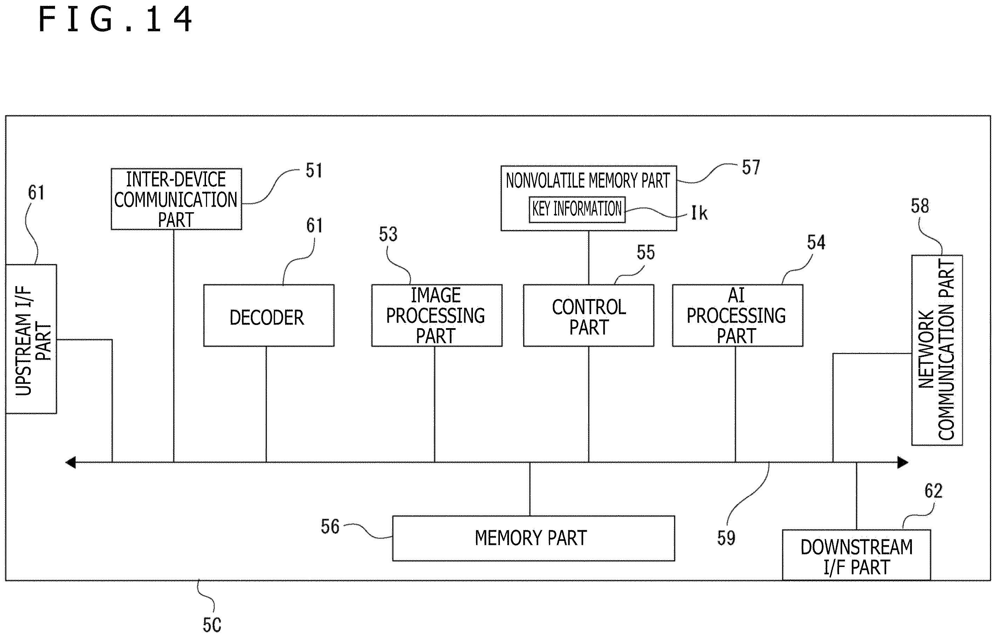

   FIG. 14 is a block diagram depicting an exemplary internal configuration of a signal processing apparatus as an alternative example of the third embodiment.
[FIG. 15]

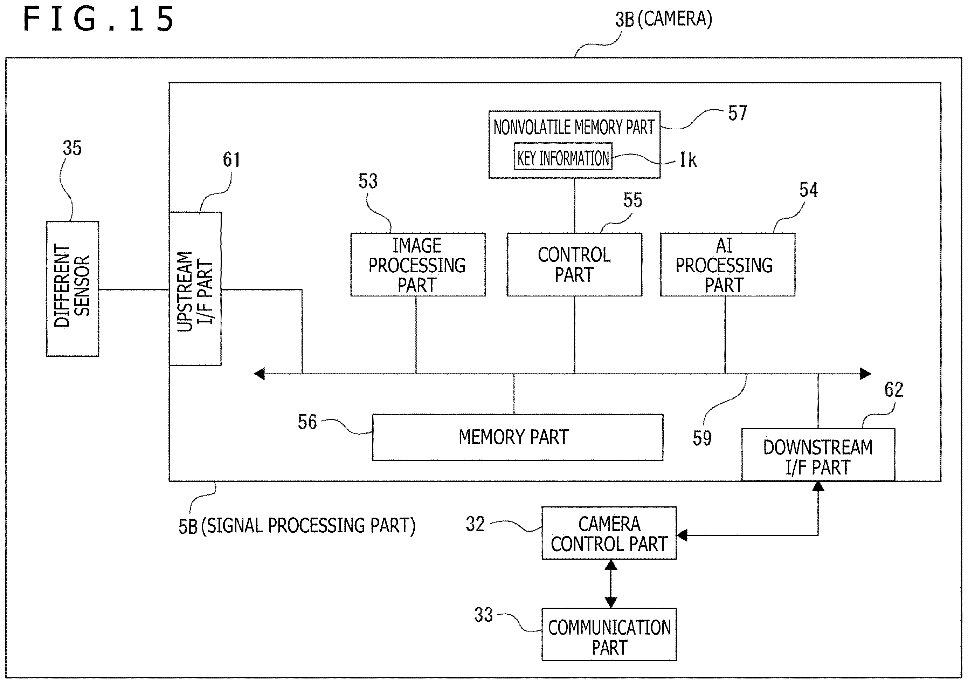

   FIG. 15 is an explanatory view of a camera using a different sensor.
[FIG. 16]

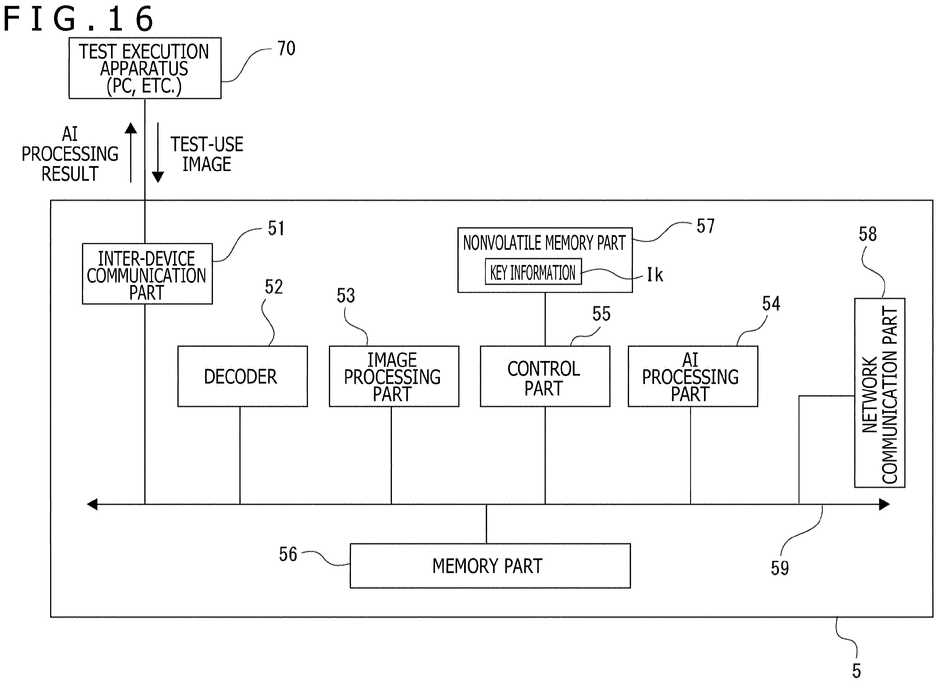

   FIG. 16 is an explanatory view of AI processing-related testing targeted for the signal processing apparatus as the embodiment.
[FIG. 17]

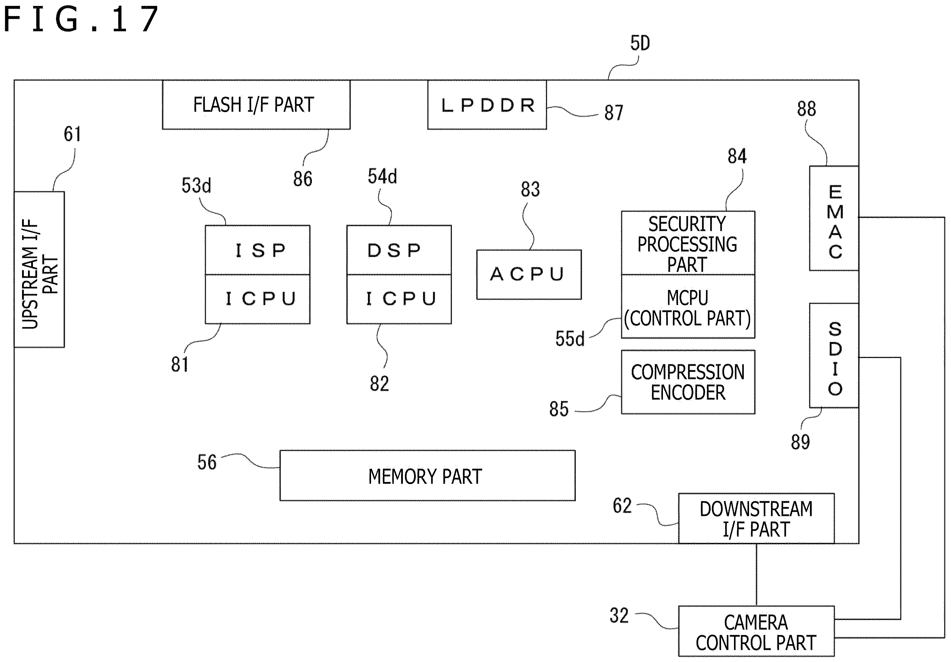

   FIG. 17 is a view for explaining an exemplary configuration of a signal processing apparatus as an alternative example.
[FIG. 18]

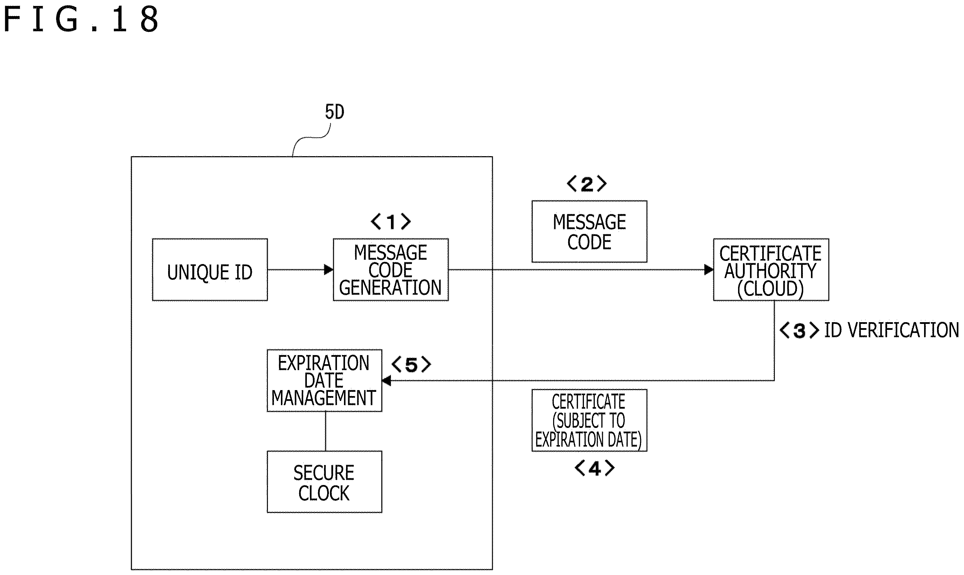

   FIG. 18 is a view for explaining an example of an AI-related data usage management method involving the use of a certificate.

### [Description of Embodiments]

Some embodiments of an information processing apparatus according to the present technology are described below with reference to the accompanying drawings in the following order.
<1. First embodiment>
   (1-1. Configuration of entire system)
   (1-2. Configuration of information processing apparatus)
   (1-3. Configuration of signal processing apparatus)
   (1-4. Examples of information processing as embodiment)
<2. Second embodiment>
<3. Third embodiment>
<4. Alternative examples>
<5. Summary of embodiments>
<6. Present technology>

### <1. First embodiment>

### (1-1. Configuration of entire system)

FIG. 1 is a block diagram depicting an exemplary overall configuration of an information processing system 100 as a first embodiment of the present technology.

As illustrated, the information processing system 100 includes a server apparatus 1, one or multiple user terminals 2, multiple cameras 3, a fog server 4, a signal processing apparatus 5 provided for each camera 3, and an AI (Artificial Intelligence) model developer terminal 6. In this example, the server apparatus 1 is able to perform intercommunication between the user terminal 2, the fog server 4, the signal processing apparatuses 5, and the AI model developer terminal 6 via a network NT such as the Internet.

The server apparatus 1, the user terminal 2, the fog server 4, and the AI model developer terminal 6 are each configured as an information processing apparatus equipped with a microcomputer that includes a CPU (Central Processing Unit), a ROM (Read Only Memory), and a RAM (Random Access Memory).

Here, the user terminal 2 is an information processing apparatus assumed to be used by a user who receives services using the information processing system 100. Further, the server apparatus 1 is an information processing apparatus assumed to be used by a service provider.

Each camera 3 includes an image sensor such as a CCD (Charge Coupled Device) type image sensor or a CMOS (Complementary Metal Oxide Semiconductor) type image sensor. The camera 3 captures images of a subject to obtain image data (captured image data) as digital data.

Each camera 3 is capable of data communication with the fog server 4. Via the fog server 4, the camera 3 can exchange various kinds of data with an external apparatus (particularly, the server apparatus 1) connected to the network NT.

In addition, each camera 3 is communicably connected with the corresponding signal processing apparatus 5 and can exchange data therewith. In this example, each camera 3 and the corresponding signal processing apparatus 5 are connected with each other via USB (Universal Serial Bus). That is, the camera 3 and the signal processing apparatus 5 may be interconnected in a wired manner either by directly plugging a USB male connector formed on the side of the signal processing apparatus 5 into a USB female connector formed on the side of the camera 3 or by means of a USB cable disposed therebetween.

Alternatively, the camera 3 and the signal processing apparatus 5 may be interconnected in a wireless fashion instead of by wire. There are no specific restrictions in terms of communication standards.

Each signal processing apparatus 5 has functions to perform AI processing on an input image by using an AI model (artificial intelligence model). Specifically, the signal processing apparatus 5 receives input of an image captured by the camera 3, performs AI processing such as an image recognition process on the captured image, and thereby obtains information indicative of the result of the AI processing.

Then, the signal processing apparatus 5 in this embodiment transmits the information indicative of the AI processing result to the camera 3, which is the input source of the captured image.

In this manner, the camera 3 without AI processing functions is made to function as if it were a camera equipped with such functions.

In this embodiment, each camera 3 transmits to the fog server 4 the information indicative of the AI processing result returned from the signal processing apparatus 5 as described above. This enables the fog server 4 to transmit the information indicating the AI processing result to an external apparatus, such as the server apparatus 1, connected to the network NT.

Also, the signal processing apparatus 5 in this example has network communication functions permitting data communication with an external apparatus connected to the network NT. This enables the signal processing apparatus 5 to receive various kinds of data such as AI model data from the server apparatus 1 and to transmit various kinds of data to the server apparatus 1, as will be discussed later.

In the information processing system 100 depicted in FIG. 1, the information indicative of the AI processing result obtained by each signal processing apparatus 5 (i.e., by each camera 3) is used here to analyze the subject. Specifically, in the information processing system 100, the server apparatus 1 or the fog server 4 generates analytical information regarding the subject on the basis of the information indicating the AI processing result sent from each camera 3 as described above. In the information processing system 100 of this example, the analytical information thus generated is transmitted to the user terminal 2 for viewing by the user.

The cameras 3 may be used here as surveillance cameras of various types. For example, the cameras 3 may serve as surveillance cameras for monitoring the interior of stores, offices, and houses; as surveillance cameras for monitoring outdoor locations such as parking lots and urban streets (including traffic surveillance cameras, etc.); as surveillance cameras for monitoring FA (Factory Automation) and IA (Industrial Automation) production lines; and as surveillance cameras for monitoring the inside and outside of a vehicle.

For example, when used as surveillance cameras in a store, multiple cameras 3 may be arranged at suitable locations in the store so as to let the user check the types of customers (in terms of gender and age group, etc.) and their behavior inside the store (i.e., their flow lines). In this case, information regarding the types of the customers and their flow lines in the store, and information regarding the congestion at checkout counters (e.g., information regarding wait time at checkout counters) may be generated as the above-mentioned analytical information.

Alternatively, when used as traffic surveillance cameras, the cameras 3 may be arranged at suitable locations near a road so as to let the user recognize information such as the license plates of passing vehicles (i.e., their vehicle numbers), colors of the vehicles, and their makes. In this case, information regarding the license plates, the colors of the vehicles, their makes, and the like may be generated as the above-mentioned analytical information.

Further, in the case of using traffic surveillance cameras for a parking lot, the cameras may be arranged to monitor parked vehicles to see if there is any person with suspicious behavior around any vehicle. In the case where such a suspicious individual is detected, the cameras may report the presence of that suspicious individual together with attributes of the suspicious individual (gender, age group, clothing, etc.).

Further, the cameras may be used to monitor free spaces in streets and parking lots, for example, in order to give notification of the location of a space where the user's vehicle can be parked.

In the above-described use for surveillance in the store, for example, the fog server 4 may presumably be installed together with each camera 3 (and each signal processing apparatus 5) with respect to each surveillance target such as the interior of the store to be monitored. Where the fog server 4 is thus provided for each surveillance target such as the store, there is no need for the server apparatus 1 to directly receive data transmitted from the multiple cameras 3 regarding the surveillance target. This helps reduce the processing load on the server apparatus 1.

Note that, in the case where there are multiple stores targeted for surveillance and where all these stores belong to the same affiliation, the fog server 4 may be provided not for each store but for a plurality of these stores. That is, the fog server 4 is not necessarily provided for each surveillance target; one fog server 4 may be provided for multiple surveillance targets.

Note that, in the case where the server apparatus 1, each camera 3, or each signal processing apparatus 5 can be provided with the functions of the fog server 4, such as when the server apparatus 1, each camera 3, or each signal processing apparatus 5 has sufficient processing capability, the information processing system 100 may dispense with the fog server 4. Instead, each camera 3 may be directly connected to the network NT, so that the server apparatus 1 may directly receive data transmitted from the multiple cameras 3.

The server apparatus 1 is an information processing apparatus having functions for comprehensive management of the information processing system 100.

As illustrated, the server apparatus 1 has a license authorization function F1, an account service function F2, a marketplace function F3, and an AI service function F4 as the functions related to management of the information processing system 100.

The license authorization function F1 is a function to perform processes related to various kinds of authorization. Specifically, the license authorization function F1 carries out a process related to device authorization of each signal processing apparatus 5 and a process related to authorization regarding the AI model to be used by each signal processing apparatus 5**.**

In the case of connection with the signal processing apparatuses 5 via the network NT, the device authorization performed by the license authorization function F1 is a process of issuing a device ID to each signal processing apparatus 5.

Further, the AI model authorization is a process of issuing a unique ID (AI model ID) to an AI model of which registration has been applied for by the AI model developer terminal 6.

The license authorization function F1 also performs a process of issuing various keys, certificates, and the like to a manufacturer of the signal processing apparatuses 5 and an AI model developer, the keys and certificates enabling secure communication between the signal processing apparatuses 5 and the AI model developer terminal 6 on one hand and the server apparatus 1 on the other hand. The license authorization function F1 further performs a process of invalidating or updating the certificates.

Further, in the case where user registration (i.e., registration of account information involving issuance of a user ID) is performed by the account service function F2 to be discussed later, the license authorization function F1 carries out a process of linking the user ID to the signal processing apparatus 5 (having the above-mentioned device ID) purchased by the user.

The account service function F2 is a function to generate and manage the user's account information. Upon receipt of user information being input, the account service function F2 generates account information based on the input user information (i.e., the account service function F2 generates account information including at least a user ID and password information).

The account service function F2 also performs a process of registration of the AI model developer (i.e., account information registration).

The marketplace function F3 is a function to market AI models. For example, the user can purchase an AI model via a website (sales site) offered by the marketplace function F3 for sales purposes.

The AI service function F4 is a function to provide the user with services regarding usage of the AI processing result.

One feature of the AI service function F4 is related, for example, to generation of the above-mentioned analytical information. That is, the feature involves performing a process of generating the analytical information regarding the subject on the basis of the information indicative of the AI processing result and then allowing the user to view the generated analytical information via the user terminal 2.

Indicated above is an exemplary configuration in which the server apparatus 1 alone implements the license authorization function F1, the account service function F2, the marketplace function F3, and the AI service function F4. Alternatively, multiple information processing apparatuses may implement these functions on a shared basis. For example, each of these functions may be implemented by one information processing apparatus. As another alternative, any one of the above functions may be implemented by multiple information processing apparatuses on a shared basis.

In FIG. 1, the AI model developer terminal 6 is an information processing apparatus for use by the AI model developer.

In this example, the server apparatus 1 offers training data sets for training with AI. The AI model developer communicates with the server apparatus 1 by using the AI model developer terminal 6 to download the training data sets. At this time, the training data sets may be offered for a fee. In this case, the training data sets can be marketed to the AI model developer by the above-mentioned marketplace function F3 provided as a function in a cloud.

After developing an AI model by using the training data sets, the AI model developer registers the developed AI model on a marketplace (i.e., a sales site offered by the marketplace function F3) by use of the AI model developer terminal 6. At this time, the AI model developer may be paid incentives every time the AI model is downloaded.

The user may purchase the AI model from the marketplace by using the user terminal 2. At the time of the purchase (download), the AI model developer may be paid incentives.

The user can install the purchased AI model into the signal processing apparatus 5. That is, the user can cause the signal processing apparatus 5 that he/she bought to perform AI processing using the purchased AI model.

On the marketplace in the cloud, an AI model optimized for each user may be registered. Specifically, for example, images captured by the cameras 3 installed in a store managed by a user may be uploaded to the cloud for storage as appropriate. Every time a predetermined number of captured images have been accumulated, the server apparatus 1 may perform a relearning process on the AI model and register the retrained AI model again on the marketplace.

In the case where personal information is included in the information (e.g., image information) to be uploaded from the cameras 3 to the server apparatus 1, the data to be uploaded may be cleared of privacy-related information for protection of privacy. The data cleared of the privacy-related information may be utilized by the AI model developer.

### (1-2. Configuration of information processing apparatus)

FIG. 2 is a block diagram depicting an exemplary hardware configuration of the server apparatus 1. As depicted, the server apparatus 1 includes a CPU 11. The CPU 11 functions as an arithmetic processing part that performs various kinds of processes explained above as the processing performed by the server apparatus 1. The CPU 11 carries out the various processes in accordance with programs stored in a ROM 12 or in a nonvolatile memory part 14 such as an EEP-ROM (Electrically Erasable Programmable Read-Only Memory) or in keeping with programs loaded from a storage part 19 into a RAM 13. The RAM 13 also stores, as appropriate, data needed by the CPU 11 in carrying out diverse processes.

The CPU 11, the ROM 12, the RAM 13, and the nonvolatile memory part 14 are interconnected via a bus 23. The bus 23 is also connected with an input/output interface (I/F) 15.

The input/output interface 15 is connected with an input part 16 configured with operating elements and operation devices. For example, the input part 16 may presumably include such operating elements and operation devices as a keyboard, a mouse, keys, dials, a touch panel, a touch pad, and a remote controller.

An operation by the user is detected by the input part 16. A signal reflecting the input operation is interpreted by the CPU 11.

The input/output interface 15 is also connected integrally with or separately from a display part 17 configured with an LCD (Liquid Crystal Display), an organic EL (Electro-Luminescence) panel, or the like and an audio output part 18 constituted by speakers, or the like.

The display part 17 is used to display diverse kinds of information and is configured with a display device provided to a housing of a computer apparatus or with an independent display device connected to the computer apparatus, for example.

The display part 17 displays, on a display screen, images subject to various kinds of image processing, moving images targeted for processing, and the like under instructions from the CPU 11. Also, given instructions from the CPU 11, the display part 17 displays various operation menus, icons, messages, and the like, i.e., serves as a GUI (Graphical User Interface) for display.

In some cases, the input/output interface 15 may be connected to the storage part 19 configured with an HDD (Hard Disk Drive), a solid-state memory, or the like and to a communication part 20 configured with a modem or the like.

The communication part 20 performs communication processing via transmission paths such as the Internet, and carries out wired/wireless communication, bus communication, and the like with various devices.

The input/output interface 15 is further connected with a drive 21 as needed. The drive 21 is loaded as needed with a removable storage medium 22 such as a magnetic disk, an optical disk, a magnetooptical disk, or a semiconductor memory.

The drive 21 can retrieve from the removable storage medium 22 data files such as programs for use in various processes. The retrieved data files may be stored into the storage part 19, or images and sounds included in the data files may be output from the display part 17 or from the audio output part 18. Computer programs and the like retrieved from the removable storage medium 22 are installed into the storage part 19 as needed.

In the computer apparatus of the above-described hardware configuration, software for processing of this embodiment can be installed by network communication through the communication part 20 or by means of the removable storage medium 22, for example. Alternatively, the software may be preinstalled in the ROM 12, the storage part 19, or the like.

When the CPU 11 performs processing operations based on various programs, the above-described information processing and communication processing required of the server apparatus 1 are carried out.

Note that the configuration of the server apparatus 1 is not limited to one constituted by a single computer apparatus as depicted in FIG. 2. Alternatively, multiple computer apparatuses may make up a system. As a system, the multiple computer apparatuses may be located on a LAN (Local Area Network) or interconnected remotely via a VPN (Virtual Private Network) using the Internet, for example. The multiple computer apparatuses may include computer apparatuses making up a group of servers (cloud) that can be used by cloud computing services.

### (1-4. Configuration of signal processing apparatus)

FIG. 3 is a view for explaining an exemplary configuration of the signal processing apparatus 5.

FIG. 3 depicts, along with an exemplary internal configuration of the signal processing apparatus 5, the server apparatus 1, the cameras 3 (communicably connected with this signal processing apparatus 5), the fog server 4, and the network NT that are indicated in FIG. 1.

As illustrated, the signal processing apparatus 5 includes an inter-device communication part 51, a decoder 52, an image processing part 53, an AI processing part 54, a control part 55, a memory part 56, a nonvolatile memory part 57, a network communication part 58, and a bus 59. In the signal processing apparatus 5, the inter-device communication part 51, the decoder 52, the image processing part 53, the AI processing part 54, the control part 55, the memory part 56, and the network communication part 58 are interconnected via the bus 59 in a manner capable of communicating data with each other.

The inter-device communication part 51 performs inter-device communication with an external apparatus (external device) in a wired or wireless manner. In this example, the inter-device communication part 51 carries out inter-device communication with the cameras 3. As discussed above, USB is used for connection in this example between the cameras 3 on one hand and the signal processing apparatus 5 on the other hand. The inter-device communication part 51 performs inter-device communication with the cameras 3 on the basis of USB communication standards.

Although not explained with illustrations, the inter-device communication part 51 of this example has a connector part for connection with the cameras 3, the connector part being attachable and detachable to and from a pairing connector part. Specifically, the inter-device communication part 51 of this example has a USB male connector attachable and detachable to and from a USB female connector (pairing connector part) formed on the side of the cameras 3.

Note that the connection with the cameras 3 may alternatively be by USB cables as described above. In this case, the inter-device communication part 51 need only have a female connector attachable and detachable to and from a male connector (pairing connector part) formed on the cable side.

The decoder 52 performs a decoding process on compression-encoded moving image data and still image data. Specifically, in the case where captured image data input from an external apparatus via the inter-device communication part 51 is compression-encoded image data, the decoder 52 performs the process of decoding the captured image data under instructions from the control part 55. After being decoded, the captured image data is stored into the memory part 56.

It may be assumed here that the captured image data input from the cameras 3 is either RAW data or RGB data. Note that the RGB data in this context refers to image data of R images, G images, and B images obtained by performing a demosaicing process on RAW data. In addition to the RAW data and RGB data, YUV data can also be input as the captured image data from the cameras 3 in some cases.

In this example, the captured image data obtained by compression encoding as RAW data is assumed to be input from the cameras 3 to the signal processing apparatus 5.

The image processing part 53 is capable of image signal processing on captured images input from the outside. This makes it possible to selectively acquire a different type of image as the image based on the captured image input from the outside.

Under control of the control part 55, the image processing part 53 carries out image signal processing on the captured image data (captured image data after decoding by the decoder 52 in this example) input from the cameras 3 via the inter-device communication part 51.

Here, the image processing part 53 can perform at least either an image format conversion process or a data size adjustment process as the image signal processing. The image format conversion process in this context means a process of converting the format of images, such as demosaicing (process of conversion from RAW format to RGB format) or black-and-white conversion (process of conversion from RGB format to black-and-white format).

The data size adjustment process in this context means a process of adjusting the size of image data, such as image size adjustment or luminance value bit count adjustment.

In this example, the image processing part 53 can also perform image signal processing for improving image quality, such as noise reduction and distortion correction, in addition to the above-mentioned image format conversion process and data size adjustment process.

In this embodiment, specific steps to be performed by the image processing part 53 as the above-mentioned image format conversion process or data size adjustment process are determined under setting control by the control part 55. For example, under control of the control part 55, the image processing part 53 is set to perform the demosaicing process and the image size adjustment process on the input image. Alternatively, depending on the setting control by the control part 55, the image processing part 53 may be set to perform the demosaicing process and the black-and-white conversion process but not the data size adjustment process on the input image. As another alternative, the image processing part 53 may be set to carry out only the data size adjustment process on the input image.

Further, depending on the setting control by the control part 55, the image processing part 53 may be set to let the input RAW data (after decoding by the decoder 52 in this example) be stored unmodified into the memory part 56, i.e., without subjecting the data to the image format conversion process or to the data size adjustment process.

Also, depending on the setting control by the control part 55, the image processing part 53 can be set to bring the image size to a specific size or to determine a specific bit count of the luminance value in the data size adjustment process.

The above-described image processing part 53 makes it possible to variably set the image format and the image data size for the image to be input to the AI processing part 54. In other words, the image format and the image data size of the image to be input to the AI processing part 54 can be set adaptably depending on the input image conditions required by the AI model.

The AI processing part 54 includes a programmable arithmetic processing device such as a DSP (Digital Signal Processor), a CPU, or an FPGA (Field Programmable Gate Array). The AI processing part 54 performs AI processing using an AI model on the input image. The AI model in this context is designed to carry out AI processing on images, the model having a neural network structure such as a CNN (Convolutional Neural Network). The AI models are not limited to those having the neural network structure. For example, models such as Vision Transformer without the neural network structure can be used. Any AI model will do as long as it has been machine-trained.

The AI processing performed by the AI processing part 54 involves, for example, an image recognition process of recognizing a subject as a specific target such as persons or vehicles. Alternatively, the AI processing may presumably be carried out as an object detection process of detecting objects regardless of the type of the subject.

The functions of the AI processing by the AI processing part 54 can be changed by changing the AI models. Explained below is an example of a case in which AI processing is performed as the image recognition process.

Specific function types of image recognition, while variably conceivable, can include the following:
- Class identification
- Semantic segmentation
- Person detection
- Vehicle detection
- Target tracking
- OCR (Optical Character Recognition)

Of the above function types, class identification is a function of identifying the class of the target. The "class" in this context means information indicative of categories of objects that distinguish, for example, "persons," "vehicles," "aircraft," "ships," "trucks," "birds," "cats," "dogs," "deer," "frogs," "horses," and the like from one another.

Target tracking is a function of tracking the subject considered to be the target. In other words, this is a function of obtaining history information regarding the position of the subject.

The memory part 56 is configured with a volatile memory. The memory part 56 is used to hold (to temporarily store) the captured image targeted for processing by the signal processing apparatus 5 as well as to hold data related to AI processing by the AI processing part 54. Specifically, in this example, the memory part 56 is used to hold the captured image data input via the inter-device communication part 51, the captured image data having been subjected to image processing by the image processing part 53, the AI model data for use by the AI processing part 54 in AI processing, and information indicative of the result of the AI processing performed by the AI processing part 54.

In this context, in the case where the "AI model data" held in the memory part 56 is for the AI processing using a CNN as in the above example, the data is assumed at least to include a weighting factor used in convolution calculation. In an alternative case where, after switchover between AI models, the neural network structure of the AI model is also changed, the "AI model data" includes not only the above weighting factor but also setting information regarding the neural network structure (e.g., including kernel size information).

The network communication part 58 performs data communication with an external apparatus via the network NT. In this example, in particular, the network communication part 58 communicates data with the server apparatus 1 via the network NT.

The control part 55 includes a microcomputer that has a CPU, a ROM, and a RAM, for example. The control part 55 controls the entire signal processing apparatus 5 by getting the CPU to execute programs stored in the ROM or programs loaded into the RAM so as to carry out various processes.

For example, the control part 55 performs control of data input and output to and from the external apparatus via the inter-device communication part 51, control of the operation of the decoder 52, control of the settings of the image processing part 53, and control of execution of the image signal processing by the image processing part 53.

Also, the control part 55 performs data communication with the external apparatus via the network NT through the network communication part 58. In particular, the control part 55 in this embodiment receives AI model designation data Da and image designation data Dp, to be discussed below, from the server apparatus 1 via the network NT.

The AI model designation data Da is data for designating the AI model to be set to the AI processing part 54. The image designation data Dp is data for designating the image to be obtained by the image processing part 53. In other words, the image designation data Dp may be said to be data for designating contents of the processing to be performed by the image processing part 53.

In this example, the AI model data itself is transmitted as the AI model designation data Da from the server apparatus 1. In the description that follows, the transmission of the AI model by the server apparatus 1 to the signal processing apparatus 5 in a predetermined data format will be referred to as "deploy."

The control part 55 controls the settings of the AI processing part 54 and those of the image processing part 53 on the basis of the above-mentioned AI model designation data Da and image designation data Dp received from the server apparatus 1. This point will be discussed again later.

Also, the control part 55 performs a decoding process on data transmitted encoded from the server apparatus 1. Specifically, in this example, the above-mentioned AI model designation data Da and image designation data Dp transmitted from the server apparatus 1 are being encoded by use of a predetermined encryption key. The control part 55 thus performs the process of decoding the AI model designation data Da and the image designation data Dp.

The control part 55 is connected with the nonvolatile memory part 57. The nonvolatile memory part 57 is used to store the data for use by the CPU of the control part 55 in carrying out various processes.

In this embodiment, the nonvolatile memory part 57 has key information Ik stored therein beforehand. Using the key information Ik, the control part 55 performs the process of decoding the AI model designation data Da and the image designation data Dp. The key information Ik will be discussed again later.

### (1-4. Examples of information processing as embodiment)

In this embodiment, the server apparatus 1 caries out various processes related to the AI functions retained by the signal processing apparatus 5.

FIG. 4 is a functional block diagram for explaining various functions provided by the CPU 11 of the server apparatus 1.

As depicted, the server apparatus 1 has functions as a use preparation processing part 11a, a use start processing part 11b, and a redeploy processing part 11c.

The use preparation processing part 11a performs processes related to the user's preparation for receiving service offerings from the information processing system 100.

Here, when receiving service offerings from the information processing system 100 of this example, the user purchases the signal processing apparatus 5 as a product compatible with the use of the information processing system 100. At this time, the signal processing apparatus 5 as a compatible product has the key information Ik stored into the nonvolatile memory part 57 (see FIG. 3) at the time of manufacture, for example, the key information Ik being used as a master key in key generation for encoding and decoding the AI model.

When the key information Ik as the master key for use in encoding/decoding the AI model is thus stored beforehand in the signal processing apparatus 5, the AI model purchased by a given user can be decoded only by the signal processing apparatus 5 bought by that user as the compatible product. In other words, any other signal processing apparatus 5 that is not a compatible product is prevented from fraudulently using the AI model.

In a pre-use procedure, the user takes steps to register the purchased signal processing apparatus 5 and the user account in connection therewith.

Specifically, the user registers all purchased signal processing apparatuses 5 desired to be used to a designated cloud. That is, in this example, the user connects the signal processing apparatuses 5 to the server apparatus 1 via the network.

In this state, the user inputs information by use of the user terminal 2 to register the signal processing apparatuses 5 and the user account to the server apparatus 1 (above-mentioned account service function F2).

Given the input information from the user, the use preparation processing part 11a generates the user's account information. Specifically, the use preparation processing part 11a generates the account information that includes at least a user ID and password information.

Besides generating the user's account information, the use preparation processing part 11a performs a process of acquiring from the connected signal processing apparatus 5 such information as a device ID, Region information (information regarding the installation site of the signal processing apparatus 5), hardware type information (e.g., whether the camera 3 to be connected is for obtaining gradation images or for acquiring distance measurement images), and OS version information, as well as a process of linking the acquired information to the generated account information.

Further, the use preparation processing part 11a performs a process of accepting the purchase of the AI model by the user and other purchase-related processes. That is, the use preparation processing part 11a carries out a process of accepting the purchase of the AI model on the above-mentioned marketplace and a process of linking the user ID to the AI model in the case where the latter is purchased.

Also, the use preparation processing part 11a performs a process of identifying the setting data for the image processing part 53 with respect to the AI model purchased by the user.

In this example, AI models with different input image conditions are found mixed among the AI models that can be bought by the user on the marketplace.

FIG. 5 is an explanatory view regarding input image conditions for AI models.

Subfigures 5A through 5C depict, respectively, an AI model (a), an AI model (b), and an AI model (c) as AI models with different input image conditions.

The AI model (a) indicated in Subfigure 5A supports input images in RGB format. In this case, the image processing part 53 is only required to be set to convert captured image data input in RAW format into images in RGB format.

The AI model (b) indicated in Subfigure 5B supports input images in black-and-white format. In this case, the image processing part 53 is only required to be set to convert captured image data input in RAW format into images in RGB format before conversion to images in black-and-white format.

The AI model (c) indicated in Subfigure 5C supports input images in RAW format. In this case, the image processing part 53 is only required to be set to store captured image data input in RAW format into the memory part 56 without performing the image format conversion process.

In the preceding description, only the conditions regarding the image formats such as RGB format and black-and-white format are presented as the exemplary input image conditions for each of the AI models. In fact, the input image conditions for each AI model also include data size-related conditions such as the above-mentioned image size and luminance value bit count.

Although not illustrated, the information processing system 100 in this example is provided with a database in which each AI model that can be purchased by the user is associated with setting data for implementing the settings of the image processing part 53 (i.e., settings for obtaining the desired type of image) corresponding to the input image conditions of the AI model of interest (the database will be referred to as a "setting data DB" hereunder).

In the case where the user purchases an AI model, the use preparation processing part 11a in FIG. 4 references the setting data DB to identify the setting data for the image processing part 53 corresponding to the purchased AI model.

In this example, the setting data thus identified functions as the above-mentioned image designation data Dp (i.e., data for designating the image to be obtained by the image processing part 53).

Also, in the case where the user purchases an AI model, the use preparation processing part 11a performs a process of encoding the data of the purchased AI model and the setting data for the image processing part 53 corresponding to that AI model.

In this example, the encoding process involves generating a different key for each of the signal processing apparatuses 5. When the encoding process is performed by use of a different key for each signal processing apparatus 5, the AI model and the setting data for the image processing part 53 can be securely deployed.

In this example, the key for encoding an AI model is generated by combining the above-mentioned key information Ik (master key) stored beforehand in each signal processing apparatus 5, the device ID, the user ID, and an ID of the AI model targeted for encoding (referred to as an "AI model ID" hereunder).

Note that the key information Ik as the master key is prepared beforehand by a service administrator managing the server apparatus 1, the key information Ik being stored in the signal processing apparatus 5 as the compatible product. It follows that, on the side of the server apparatus 1, relations of correspondence are recognized between each specific signal processing apparatus 5 and each specific master key. The correspondence relations are used to generate the encryption key for each signal processing apparatus 5 as discussed above.

By use of the encryption key generated for each signal processing apparatus 5 as described above, the use preparation processing part 11a encodes the AI model purchased by the user and the setting data for the image processing part 53 corresponding to the purchased AI model.

The use start processing part 11b performs processes related to the start to use the signal processing apparatus 5. Specifically, in the case where the user requests deployment of the purchased AI model to the signal processing apparatus 5, the use start processing part 11b carries out a process of deploying the encoded AI model and the encoded setting data for the image processing part 53 corresponding to the AI model to the corresponding signal processing apparatus 5.

FIG. 6 schematically depicts data to be deployed to the signal processing apparatus 5.

The deploy data in this case includes the AI model data as the AI model designation data Da and the setting data for the image processing part 53 as the image designation data Dp. Specifically, the deploy data in this case includes the encoded AI model data and the encoded setting data for the image processing part 53.

It is assumed for this embodiment that AI models are not stored in the nonvolatile memory retained by the signal processing apparatus 5. Given this assumption, the AI model data itself is transmitted as the AI model designation data Da. In an alternative example, in the case where multiple types of AI model data can be stored in the nonvolatile memory of the signal processing apparatus 5, the AI model designation data Da can be issued in the form of information for designating which of the multiple AI models is to be set for the AI processing part 54 (e.g., information for designating the ID of the applicable AI model).

Likewise, whereas the setting data itself for the image processing part 53 is assumed to be transmitted as the image designation data Dp, in the case where multiple sets of setting data can be stored in the signal processing apparatus 5, the image designation data Dp can be issued in the form of information for designating which of the multiple sets of setting data is to be set for the image processing part 53 (e.g., information for designating the ID of the applicable setting data).

Here, upon receipt of the encoded AI model and the encoded setting data as the above-mentioned deploy data, the signal processing apparatus 5 causes the control part 55 to generate a key by use of the key information Ik, the device ID of this signal processing apparatus 5, the user ID, and the AI model ID and, on the basis of the key thus generated, decode the received encoded data.

At least prior to decoding the AI model, the signal processing apparatus 5 has the user ID stored therein. For example, upon registration of the user's account discussed above, the server apparatus 1 sends the user ID to the signal processing apparatus 5 for storage into a nonvolatile memory such as the nonvolatile memory part 57, for example. Alternatively, in the case where the input of the user ID to a signal processing apparatus 5 purchased by the user is the condition for enabling the user to use that signal processing apparatus 5, the user ID input by the user is stored into that signal processing apparatus 5.

Further, the AI model ID is transmitted from the server apparatus 1 at the time of deployment, for example. The control part 55 generates a key by use of the AI model ID, the user ID stored beforehand as described above, and the key information Ik retained in the nonvolatile memory part 57. The control part 55 uses the key thus generated to decode the received encoded data.

The control part 55 then controls the settings of the AI processing part 54 and the image processing part 53 on the basis of the decoded AI model data (AI model designation data Da) and the setting data for the image processing part 53 (image designation data Dp). That is, with the decoded AI model data stored into the memory part 56 (volatile memory), the AI processing part 54 performs AI processing on the input image by use of the AI model based on a neural network constituted according to the stored AI model data.

The control part 55 also performs a process of setting the decoded setting data for the image processing part 53, causing the latter to carry out processes according to the setting data.

FIG. 7 schematically depicts how the settings of the image processing part 53 and the AI processing part 54 are controlled on the basis of the above-described image designation data Dp and AI model designation data Da.

When the settings of the AI processing part 54 are controlled on the basis of the AI model designation data Da, the signal processing apparatus 5 can perform AI processing based on the AI model purchased by the user.

Further, when the settings of the image processing part 53 are controlled on the basis of the image designation data Dp, the image input to the AI processing part 54 can be formed into an image complying with the input image conditions for the AI model used by the AI processing part 54. This makes it possible to suitably perform the AI processing.

The redeploy processing part 11c in FIG. 4 performs a redeploy process subsequent to the initial deploy process.

In this example, as discussed above, the AI model data such as a weighting factor of a CNN used by the AI processing part 54 during AI processing is held in the memory part 56, which is a volatile memory. For this reason, in the case where the signal processing apparatus 5 in the information processing system 100 of this example is switched off, the AI model data cannot be retained. In the case where the signal processing apparatus 5 is restarted, it thus needs to request redeployment of the AI model data.

In response to a redeploy request made to the server apparatus 1 by the control part 55 upon restart of the signal processing apparatus 5, the redeploy processing part 11c performs a process of issuing the deploy data explained in reference to FIG. 6. Specifically, the redeploy processing part 11c performs a process of delivering the relevant deploy data to the signal processing apparatus 5 of interest.

For review purposes, FIGS. 8 and 9 give flowcharts indicating overall process flows of the information processing system 100 applicable in the case where the above-described processes of the use preparation processing part 11a and the use start processing part 11b are carried out.

FIG. 8 is a flowchart of processing applicable upon registration of the user's account. FIG. 9 is a flowchart of processing ranging from the purchase of an AI model to its deployment (initial deployment).

In FIGS. 8 and 9, the processing associated with "server apparatus" is carried out by the CPU 11 of the server apparatus 1, and the processing associated with "signal processing apparatus" is conducted by the control part 55 of the signal processing apparatus 5. The processing associated with "user terminal" is performed by the CPU of the user terminal 2.

Note that, upon start of the processing in FIGS. 8 and 9, the user terminal 2 and the signal processing apparatus 5 are assumed to be communicably connected with the server apparatus 1 via the network NT.

In FIG. 8, the user terminal 2 performs a user information input process in step S201. This is the process of inputting the information for account registration (at least the user ID and the password information) to the server apparatus 1 on the basis of the user's input operations.

Upon receipt of the information input from the user terminal 2, the server apparatus 1 requests the signal processing apparatus 5 in step S101 to transmit the information necessary for account registration. Specifically, the server apparatus 1 requests transmission of the above-mentioned device ID, Region information, hardware type information, OS version information, and the like to be linked with the user ID.

The signal processing apparatus 5 performs a request information transmission process in step S301 of transmitting to the server apparatus 1 the information requested by the server apparatus 1.

Upon receipt of the request information from the signal processing apparatus 5, the server apparatus 1 performs a user registration process in step S102 of generating the account information based on the user information input from the user terminal 2 and of linking to the user ID the above-mentioned request information received from the camera 3.

The processing indicated in FIG. 9 is explained next.

First, the user terminal 2 performs an AI product purchasing process in step S210. This is the process of purchasing an AI model on the above-described marketplace. Specifically, the user terminal 2 performs the process in step S210 of designating the AI model to be purchased from the server apparatus 1, making the purchase of the AI model, and the like on the basis of the user's input operations.

The server apparatus 1 performs a purchase support process in step S110 of linking the product (AI model) designated to be purchased by the user terminal 2 with the user making the purchase. Specifically, the server apparatus 1 carries out the process of linking the ID of the AI model designated to be purchased (AI model ID) with the user ID of the user who is buying the AI model.

In step S111 following step S110, the server apparatus 1 generates an encryption key. That is, the server apparatus 1 generates the key that combines the device ID obtained from the signal processing apparatus 5 in the process described above with reference to FIG. 8, the key information Ik as the master key, the user ID of the user making the purchase, and the AI model ID of the purchased AI model.

In step S112 following step S111, the server apparatus 1 encodes the purchased AI model and the setting data for the image processing part 53. Specifically, the server apparatus 1 identifies the setting data for the image processing part 53 corresponding to the purchased AI model, by referencing the above-mentioned setting data DB, and encodes the purchased AI model data and the identified setting data by use of the key generated in step S111.

In this example, the key information Ik is used for generation of an encryption key as discussed above. For this reason, in the case where there are multiple signal processing apparatuses 5 to be addressed, an encryption key is generated for each of the signal processing apparatuses 5. Each signal processing apparatus 5 has its data encoded by use of a different encryption key, so that encoded data is generated for each of the signal processing apparatuses 5.

After the above-described processes related to the purchase of the AI product are completed, in the case where the user desires to get each signal processing apparatus 5 to start image processing using the purchased AI model, the user terminal 2 is used to send a deploy request to the server apparatus 1 ("request AI deployment" in step S211).

After performing the above-described process in step S112, the server apparatus 1 waits in step S113 for the deploy request to arrive.

Upon receipt of the deploy request, the server apparatus 1 performs a deploy process in step S114 of deploying the encoded AI model and setting data. That is, the server apparatus 1 carries out the process of transmitting the encoded data obtained in step S112 to the corresponding signal processing apparatus 5.

Upon receipt of the encoded data transmitted from the server apparatus 1, the signal processing apparatus 5 performs a decoding process in step S310 of decoding the AI model and the setting data. That is, the signal processing apparatus 5 generates a key by combining the key information Ik stored in the nonvolatile memory part 57, the device ID, the user ID, and the AI model ID. Using the key thus generated, the signal processing apparatus 5 performs the process of decoding the encoded data, thereby decoding the deployed AI model data and setting data for the image processing part 53.

In step S311 following step S310, the signal processing apparatus 5 controls the settings of the image processing part 53 and the AI processing part 54. That is, the signal processing apparatus 5 controls the settings of the image processing part 53 on the basis of the decoded setting data and the settings of the AI processing part 54 based on the decoded AI model data.

Note that, whereas no illustration is given here of the processes related to redeployment by the redeploy processing part 11c, the redeploy process, as discussed above, is initiated by the control part 55 of the restarted signal processing apparatus 5 issuing a redeploy request to the server apparatus 1. In response to the redeploy request, the server apparatus 1 generates encoded deploy data (AI model designation data Da and image designation data Dp) corresponding to the signal processing apparatus 5 having issued the redeploy request, and transmits the encoded deploy data to that signal processing apparatus 5.

The processes to be performed by the signal processing apparatus 5 after receiving the encoded deploy data are the same as those of steps S310 and S311 and thus will not be discussed further.

Here, as described above, the signal processing apparatus 5 in this embodiment transmits (returns) the information indicative of the result of the AI processing performed by the AI processing part 54 to the camera 3, which is the source of the captured image input.

FIG. 10 is a flowchart indicating exemplary processing performed by the control part 55 to return the information indicative of the AI processing result to the camera 3 in this manner.

As depicted, the control part 55 waits in step S320 until the result of the AI processing performed by the AI processing part 54 is obtained. Upon acquisition of the AI processing result, the control part 55 performs the process in step S321 of transmitting information indicative of the AI processing result to the camera 3. That is, the control part 55 carries out the process of transmitting the information indicating the AI processing result to the camera 3 via the inter-device communication part 51.

Here, the information indicative of the AI processing result may conceivably include, for example, either the AI processing result itself output from the AI processing part 54, specifically, information indicating an image region in which a particular object is detected in the case where the AI processing involves detecting that particular object from within the image; or meta information (metadata) other than images such as information indicating an identification class for each subject in the image in the case where the AI processing involves semantic segmentation.

Alternatively, the information indicative of the AI processing result may conceivably be an image obtained by treating the captured image input to the AI processing part 54, according to the above-mentioned metadata. For example, the information may be an image on which is overlaid a frame indicating the image region where a specific object is detected within the captured image. Such treated images also serve as the information indicative of the result of the AI processing performed by the AI processing part 54.

Note that the process of treating the captured image based on the above-mentioned metadata may conceivably be performed by the control part 55 through software processing. Alternatively, the AI processing part 54 may be equipped with functions to treat images based on the metadata.

Note that, in the foregoing description, it is assumed that the captured image data input to the signal processing apparatus 5 from the camera 3 is compression-encoded. However, it is not mandatory for the signal processing apparatus 5 to receive input of the compression-encoded captured image data from the camera 3. In the case where uncompressed captured image data is assumed to be input from the camera 3, the signal processing apparatus 5 has no need for the decoder 52.

Further, the foregoing description depicts an exemplary configuration in which the deploy data (the AI model data and the setting data for the image processing part 53) issued by the server apparatus 1 is received by the signal processing apparatus 5 via the network communication part 58. Alternatively, the deploy data may be arranged to be issued by the server apparatus 1 via the fog server 4, the camera 3, and the inter-device communication part 51 and received by the signal processing apparatus 5. In this case, it is not mandatory for the signal processing apparatus 5 to include the network communication part 58.

### <2. Second embodiment>

A second embodiment is explained below.

The second embodiment is an example in which images captured by the camera 3 are input to the signal processing apparatus 5 via a fog server.

In the ensuing description, the constituent elements similar to those already explained above are given the same reference signs, and redundant explanations are omitted.

FIG. 11 is a view for explaining an exemplary configuration of an information processing system 100A as the second embodiment. Although not depicted in FIG. 11, the AI model developer terminal 6 in FIG. 1 is also included in the information processing system 100 constituting the second embodiment.

As in the information processing system 100, multiple cameras 3 are practically included in the information processing system 100A along with the signal processing apparatus 5 provided for each camera 3. Further, the multiple cameras 3 are communicably connected to a fog server 4A.

The information processing system 100A has the fog server 4A replacing the fog server 4. The fog server 4A is different from the fog server 4 in that it has functions to communicate data with the signal processing apparatus 5 via the inter-device communication part 51.

The fog server 4A receives input of captured image data from each of the cameras 3. The fog server 4A transmits the captured image data to the signal processing apparatus 5 corresponding to each camera 3.

In this case, what makes the signal processing apparatus 5 different is that the source from which to input the captured image data and the destination to which to transmit information indicative of the result of the AI processing performed by the AI processing part 54 are changed from the cameras 3 to the fog server 4A. The processing itself performed by the control part 55 is similar to that explained above in connection with the first embodiment. That is, in this case as well, the deploy data is sent from the server apparatus 1 and received by the signal processing apparatus 5 via the network NT through the network communication part 58.

In the case of the second embodiment, the AI processing functions are not added to the cameras 3. However, viewed as a comprehensive imaging system, the information processing system 100A is still considered to provide the AI processing functions for each camera 3 in dealing with captured images.

Note that, in the second embodiment as well, the captured image data to be input to the signal processing apparatus 5 may be either compression-encoded or left uncompressed. In the case where the captured image data is uncompressed, the signal processing apparatus 5 has no need for the decoder 52.

Further, in the second embodiment, the deploy data can also be sent from the server apparatus 1 via the fog server 4 through the inter-device communication part 51 before being received by the signal processing apparatus 5. In this case, the signal processing apparatus 5 has no need for the network communication part 58.

Moreover, the information indicative of the AI processing result can be returned to the fog server 4A via the network communication part 58. Alternatively, the information indicating the AI processing result can be transmitted to the server apparatus 1 through the network communication part 58.

### <3. Third embodiment>

A third embodiment is configured in such a manner that a signal processing apparatus having the functions as the image processing part 53, the AI processing part 54, and the control part 55 can be incorporated in the camera.

FIG. 12 is a block diagram depicting an exemplary overall configuration of an information processing system 100B as the third embodiment. FIG. 13 is a block diagram depicting an exemplary internal configuration of a camera 3B disposed in the information processing system 100B.

The information processing system 100B is different from the information processing system 100 in that the camera 3B, a fog server 4B, and a server apparatus 1B are provided to replace the camera 3, the fog server 4, and the server apparatus 1, respectively.

The camera 3B incorporates a signal processing part 5B that inputs and processes the captured image data output from an image sensor (image sensor 31, to be discussed later), the signal processing part 5B having the functions as the image processing part 53, the AI processing part 54, and the control part 55 (see FIGS. 12 and 13).

The server apparatus 1B is different from the server apparatus 1 in that it transmits the deploy data (AI model designation data Da and image designation data Dp) to the camera 3B via the network NT through the fog server 4B.

The fog server 4B is different from the fog server 4 in that it performs a process of receiving, via a communication part 33 illustrated in FIG. 13, the information indicative of the AI processing result obtained by the signal processing part 5B of each camera 3B.

In FIG. 13, the camera 3B includes the image sensor 31, the signal processing part 5B, a camera control part 32, and the communication part 33.

The image sensor 31 is configured as a solid-state image pickup element such as a CCD or CMOS sensor. The image sensor 31 includes a pixel array part and a readout circuit, the pixel array part being formed by arranging pixels two-dimensionally, each of the pixels having a photoelectric conversion element such as a photodiode, the readout circuit reading out an electrical signal obtained by photoelectric conversion from each of the pixels in the pixel array part.

The readout circuit performs, for example, processes such as CDS (Correlated Double Sampling) and AGC (Automatic Gain Control) on the electrical signal obtained by photoelectric conversion, and in addition, carries out an A/D (Analog/Digital) conversion process. The A/D conversion process provides the captured image data in digital form.

The image sensor 31 outputs the captured image data to the signal processing part 5B.

In this example, the captured image data output from the image sensor 31 is assumed to be uncompressed image data in RAW format.

The signal processing part 5B includes an upstream I/F (interface) part 61 and a downstream I/F part 62, in addition to the image processing part 53, the AI processing part 54, the control part 55, the memory part 56, and the bus 59.

Note that, in this example, the captured image data from the image sensor 31 is uncompressed as described above. For this reason, the decoder 52 is not included in the signal processing part 5B.

The upstream I/F part 61 performs a process of inputting the captured image data from the image sensor 31 in accordance with a predetermined data communication method. As illustrated, the upstream I/F part 61 is connected to the bus 59. This makes it possible for the memory part 56 to temporarily hold the captured image data input from the image sensor 31.

The upstream I/F part 61 used in this example complies with the MIPI (Mobile Industry Processor Interface) communication standard, for example.

The downstream I/F part 62 serves as a communication interface that communicates data with the camera control part 32 disposed outside the signal processing part 5B. As depicted, the downstream I/F part 62 is connected with the bus 59. This allows the downstream I/F part 62 to communicate data with various parts connected to the bus 59.

The downstream I/F part 62 used in this example also complies with the MIPI communication standard, for example.

The camera control part 32 includes a micro-computer that has a CPU, a ROM, and a RAM, for example. The CPU controls the entire camera 3B by executing programs stored in the ROM or programs loaded into the RAM to carry out various processes.

As illustrated, the camera control part 32 is connected with the communication part 33. It is through the communication part 33 that the camera control part 32 can perform various types of data communication with an external apparatus. The communication part 33 in this example is capable of communicating data at least with the fog server 4B.

In this case, the control part 55 controls the settings of the image processing part 53 and those of the AI processing part 54 on the basis of the deploy data received from the server apparatus 1B via the fog server 4B, the communication part 33, and the downstream I/F part 62. In this example, too, the deploy data is encoded. Given the deploy data from the server apparatus 1B, the control part 55 generates a decryption key based on the key information Ik stored in the nonvolatile memory part 57. Using the decryption key thus generated, the control part 55 decodes the encoded deploy data.

Also, the control part 55 transfers the information indicative of the result of the AI processing performed by the AI processing part 54 to the camera control part 32 via the downstream I/F part 62. The camera control part 32 is controlled to transmit the information indicating the AI processing result to the fog server 4B via the communication part 33.

For the camera 3B indicated in FIG. 13, consider a configuration in which the image processing part 53 receives input of the captured image data from the image sensor 31 in units of n lines (n is a natural number) so as to perform image signal processing in units of n lines. In this case, the AI processing part 54 successively receives input of the image data processed by the image processing part 53 in units of n lines.

Note that the above is only an example. In another exemplary configuration, each frame as a whole of the captured image data input from the image sensor 31 may conceivably be stored into the memory part 56 before the image processing part 53 sequentially carries out the image signal processing thereon.

Note that, in the example above, the deploy data from the server apparatus 1B is received by the signal processing part 5B via the fog server 4B. In an alternative configuration, the deploy data may be received by the signal processing part 5B not through the fog server 4B but via the network NT from the server apparatus 1B. For example, the communication part 33 may be equipped with network communication functions, so that the deploy data from the server apparatus 1B may be received by the signal processing part 5B through the communication part 33. As another alternative, the network communication part 58 may be provided as in the case of the signal processing apparatus 5 illustrated in FIG. 3, so that the deploy data from the server apparatus 1B may be received by the signal processing part 5B through the network communication part 58.

Further, in the case where the signal processing part 5B is to output metadata lighter in data volume than images as the information indicative of the AI processing result, the downstream I/F part 62 need not necessarily be one that supports high-speed communication.

FIG. 14 is a block diagram depicting an exemplary internal configuration of a signal processing apparatus 5C as an alternative example of the third embodiment.

As depicted, the signal processing apparatus 5C is supplemented with the upstream I/F part 61 and the downstream I/F part 62 compared with the signal processing apparatus 5 explained above in connection with the first embodiment.

Here, the inter-device communication part 51 may alternatively be described as a "first reception part" that receives captured images from an external apparatus. Further, the upstream I/F part 61 may otherwise be described as a "second reception part" that receives captured images from an external image pickup element.

The configuration in which the inter-device communication part 51 as the first reception part is disposed along with the upstream I/F part 61 as the second reception part enables the above signal processing apparatus 5C to support two use cases: one use case in which the signal processing apparatus 5C is externally attached to the camera 3 as depicted in the first embodiment, and the other use case in which the signal processing apparatus 5C is incorporated in the camera 3B as indicated in FIG. 13.

It has been explained above for illustrative purposes that the image sensor 31 is used as an RGB sensor working as an image pickup element included in the camera 3B. Alternatively, as depicted in FIG. 15, a different sensor 35 whose captured images are different in type from those of the image sensor 31 may be used.

For example, a distance measuring sensor (depth sensor) may be used as the different sensor 35 for obtaining a distance measurement image that gives per-pixel information indicative of the distance to the subject. In other examples, there may be provided, as the different sensor 35, a polarization sensor that acquires polarization images indicating polarization information regarding incident light per pixel, a multi-spectrum sensor that obtains multiple (at least 4) narrow-band images of received light in different wavelength bands, a thermal sensor that gains thermal images indicative of temperature information per pixel, or the like.

In this description, "to capture images" means broadly to obtain image data that covers the subject. The image data in this context generically refers to data including multiple pieces of pixel data.

Further, in the present technology, an "imaging apparatus" broadly refers to apparatuses equipped with imaging functions. This is a concept that includes both the camera as a whole and the sensor as a standalone unit.

Where it is desired that the signal processing apparatus having the AI processing part 54 be used in common in conjunction with various types of image pickup elements, the settings of the image processing part 53 are only required to be controlled in such a manner that the image processing part 53 serves as a programmable processor such as an FPGA processor to perform the image signal processing corresponding to each type of image pickup element connected to the signal processing apparatus, the processing being based on the image designation data Dp.

Alternatively, the image processing parts 53 may conceivably be disposed each to perform the image signal processing corresponding to a given type of image pickup element. One of the image processing parts 53 that corresponds to the type of the image pickup element connected to the signal processing apparatus may be selected to process images input from the connected image pickup element, the selection being based on the image designation data Dp.

In the case where the former scheme above is adopted, the image processing part 53 such as the FPGA processor may be interposed between the image pickup element and the signal processing apparatus.

Here, in the case where the different sensor 35 is used, the AI processing may conceivably be carried out as sensor fusion processing by an additional use of an RGB sensor. In this case, multiple upstream I/F parts 61 are provided to receive captured images from the respectively corresponding sensors. In this case, the image processing part 53 may be provided for each different sensor (for each upstream I/F part 61). Further, in this case, the AI processing part 54 may receive input of images from each corresponding sensor, the input images being subject to different input image conditions. Thus, the settings of each image processing part 53 may be controlled on the basis of the respectively corresponding input image conditions.

### <4. Alternative examples>

Note that the embodiments are not limited to the specific examples discussed above and may be configured in various alternative forms.

For example, as depicted in FIG. 16, the signal processing apparatus 5 may be connected not to the cameras 3 but to a test execution apparatus 70 such as a PC (personal computer) in order to perform tests related to AI processing.

In this case, the signal processing apparatus 5 receives input of a test-use image from the test execution apparatus 70. The signal processing apparatus 5 causes the image processing part 53 to perform image signal processing on the test-use image as needed while causing the AI processing part 54 to execute AI processing. In this case, too, the control part 55 performs the process of transmitting the information indicative of the result of the AI processing performed by the AI processing part 54 to the external apparatus (test execution apparatus 70 in this case) via the inter-device communication part 51. This enables the test execution apparatus 70 to evaluate the AI processing result and take measurements of the execution speed of the AI processing, for example.

Note that the above example is one in which the signal processing apparatus 5 is used as the test target. Alternatively, the signal processing apparatus 5C (see FIG. 14) can be targeted for similar tests.

As another alternative, the test image received by the inter-device communication part 51 (first reception part) may be directly input to the AI processing part 54, without being routed through the image processing part 53, in order to execute AI processing.

Further, the exemplary configurations explained above are those in which the AI processing part 54 uses only one AI model to perform AI processing. In an alternative configuration, AI models with different functions for different stages can be provided. For example, an upstream AI model may be used to perform a process of detecting a specific object such as persons, the result of the process being input to a downstream AI model. The downstream AI model may then carry out an attribute recognition process on an image region in which the specific object has been detected by the upstream AI model, the process involving recognition of attributes of the specific object such as the age and gender of the detected persons.

In this case, the settings of the image processing part 53 are only required to be controlled in such a manner that at least the input image conditions for the upstream AI model are to be met.

The configurations of the signal processing apparatus explained above for illustrative purposes are only examples. As a further example, the signal processing apparatus may be configured with a signal processing part 5D as depicted in FIG. 17.

This is the case, as with the signal processing part 5B in the third embodiment, in which the signal processing apparatus equipped with the AI processing functions is capable of being incorporated in a camera.

As illustrated, the signal processing part 5D includes the upstream I/F part 61, the downstream I/F part 62, and the memory part 56 as in the case of the signal processing part 5B. What makes the signal processing part 5D different from the signal processing part 5B is that it includes an ISP (Image Signal Processor) 53d, a DSP 54d, an ICPU 81, a DCPU 82, an MCPU 55d, an ACPU 83, a security processing part 84, a compression encoder 85, a flash I/F part 86, an LPDDR 87, an EMAC 88, and an SDIO 89.

The ISP (Image Signal Processor) 53d and the DSP 54d perform processes corresponding to those carried out by the above-described image processing part 53 and AI processing part 54, respectively.

The ICPU 81 and the DCPU 82 perform processes related to operations of the ISP 53d and the DSP 54d, respectively. For example, the ICPU 81 sets the operations of the ISP 53d. Further, the DCPU 82 sets the operations of the DSP 54 for controlling the settings of the AI model used by the DSP 54, for example.

For example, the image designation data Dp received from the server apparatus 1 is loaded into the ICPU 81. On the basis of the received image designation data Dp, the ICPU 81 sets the operations of the ISP 53d.

Further, the AI model, placed in the memory part 56, is read out to the DSP 54d as needed under control of the DCPU 82.

The MCPU 55d corresponds to the above-described control part 55 and controls the signal processing part 5D as a whole. The MCPU 55d also performs processes related to the security processing part 84 that executes security processing such as a process of decoding encoded data.

The MCPU 55d, unlike the ACPU 83 to be discussed below, is a CPU that is not open to users.

The ACPU 83 is a CPU that is open to users and that is disposed to execute user applications. The user applications in this context include applications for causing the DSP 54d to perform processing of the information indicative of the AI processing result and to carry out various determination processes based on the AI processing result.

Note that specific examples of the application processing executed by the ACPU 83 will be discussed later.

The compression encoder 85 performs a process of compressing, based on the JPEG (Joint Photographic Experts Group) standard, for example, the images to be output to the outside via the downstream I/F part 62.

In the case where InputTensor (input images) of an AI model is to be transferred to the server apparatus 1 as AI model relearning data, the compression encoder 85 can be used to compress the InputTensor data.

The flash I/F part 86 is an interface for gaining access to an externally attached flash ROM that holds software related to initialization of the camera, such as boot programs and firmware.

Note that, alternatively, a default AI model may be placed in the flash ROM for use by the DSP 54d.

The LPDDR 87 is an interface for accessing an externally attached DRAM.

For example, there may be conceived a configuration in which multiple AI models are retained in the DRAM to let the DSP 54d switch from one AI model to another for use. Alternatively, there may be provided a configuration in which multiple sets of setting information regarding the ISP 53d are retained in the DRAM in order to switch the setting information of the ISP 53d from one set to another.

The EMAC 88 and the SDIO 89 are assumed to serve as communication interfaces with the camera control part 32 disposed outside the signal processing part 5D. The EMAC 88 is an interface higher in speed than the SDIO 89.

Here, a different type of sensor may presumably be connected via the upstream I/F part 61. If the connector in this case is designed to have an end structure compatible with different types of sensors to be connected, then the connector can serve as a common connector supporting the different sensors. In other words, the connector makes it easier to provide the AI processing functions to various types of cameras having different types of sensors.

In this case, the connector can be assumed to be a 32-pin or 64-pin connector, for example. If the same types of power lines, control lines, and signal lines are assigned to the same pins for each type of sensors, then the common connector can support different sensors.

Further, even in the case where the number of signal lines is not common between different sensor types, relevant signals can be received as long as the signal lines of the sensor in use are fewer than the maximum number of signal lines that can be supported by the signal processing part 5D, with unnecessary signal lines disabled.

Moreover, in the case where the data format is different depending on the sensor type (e.g., some sensors do not support MIPI), the data can be supported by means of a converter chip provided inside the sensor module.

Here, in order to support different types of sensors, the ISP 53d may conceivably be equipped with processing circuits individually corresponding to the different sensor types. Depending on the type of the connected sensor, the ICPU 83 may perform control so as to input sensor images to the processing circuit applicable to the connected sensor.

Note that the configuration depicted in FIG. 17 can also be applied to an externally attached signal processing apparatus such as the signal processing apparatus 5 illustrated in FIG. 3. In particular, an arrangement including the ISP 53d, the DSP 54d, the ICPU 81, the DCPU 82, the MCPU 55d, the ACPU 83, the security processing part 84, and the compression encoder 85 can be suitably adapted to the externally attached signal processing apparatus.

The application processing of the ACPU 83 is explained below.

The application processing of the ACPU 83 presumably involves not only the processing of user applications, i.e., of applications developed by users, but also the processing of administrator applications offered by the administrator managing the AI model offering service.

The administrator applications are assumed to be either bundled in the AI model deployed to the signal processing part 5D or preinstalled in the signal processing part 5D. Meanwhile, the user applications are assumed to be not bundled in the AI model but deployed independently, for example.

Two examples of the application processing of the ACPU 83 are explained here: one in which the processing is completed on a single frame, and the other in which the processing spans multiple frames.

An example of the application processing completed on a single frame can be related to estimation of a skeletal frame of the subject. In this case, the information indicative of the result of inference of AI processing is assumed to be Tensor data that includes a heatmap of an estimated skeletal frame (e.g., a map indicating a distribution of probability values representing specific body portions of a person) and vector information regarding the skeletal frame.

In this case, the application processing involves generating position information (e.g., text data) regarding the individual body portions on the basis of the above-mentioned inference result information.

Two examples of the processing spanning multiple frames can be presented as follows:
The first example involves keeping track of persons (human tracking), and the second example involves headcount.

The human tracking of the first example can be performed in one of two versions: a simple version or a complex version.

The simple version assumes that the information indicative of the result of AI processing inference is position information regarding bounding boxes for persons. The application processing in this case involves giving an individual ID to each of the bounding boxes and outputting the position information regarding each person (each individual ID) on the basis of the bounding box position information obtained per frame.

The complex version involves determining the same person by use of not only the position information regarding the bounding boxes but also feature data regarding the persons. In this case, the information indicative of the result of AI processing inference is assumed to include the position information regarding the bounding boxes for persons and the tensor data indicative of individual features such as those of human bodies and faces. The application processing in this case involves determining the same person on the basis of the bounding box position information obtained per frame and also on the basis of the individual feature information, and giving an individual ID to each bounding box. In this case, too, the output of the application processing is the position information per individual ID.

The headcount processing as the second example assumes that the information indicative of the result of AI processing inference includes, as in the case of the above complex version, the bounding box position information regarding persons and the tensor data indicative of individual features.

The application processing in this case involves determining the same person on the basis of the above-mentioned inference result information and, upon detection of a new person in a frame, incrementing the headcount value by 1.

As described above, the application processing to be executed by the ACPU 83 may conceivably involve processing the inference result information (i.e., AI processing result information), such as converting non-human-readable tensor data to human-readable data (e.g., text data), and making various determinations based on the inference result information.

Here, it may be conceived that, although not specifically referred to so far, certificates are used to manage the use of various kinds of data regarding AI processing (AI-related data), such as the AI model designation data Da (AI models), the image designation data Dp, and applications for implementing the above-described application processing.

In managing the use of the AI-related data by using the certificates, the MCPU 55d in the example of FIG. 17 may perform relevant processes.

FIG. 18 is a view for explaining an example of an AI-related data usage management method that uses a certificate.

In this case, the signal processing part 5D is arranged to store a unique ID therein beforehand.

The signal processing part 5D (e.g., MCPU 55d) generates a message code based on the unique ID (<1> in FIG. 18), and transmits the generated message code to a certificate authority in a cloud (<2> in FIG. 18).

The certificate authority acquires the unique ID from the message code and verifies whether the acquired unique ID is being managed as a legitimate ID (<3> in FIG. 18). If the unique ID is verified to be a legitimate ID, the certificate authority issues a certificate and sends it to the signal processing part 5D (<4> in FIG. 18). What is assumed here is the case where the AI-related data is to be used subject to an expiration date. The above certificate to be issued and transmitted is bound by the expiration date.

Using a secure clock, the signal processing part 5D performs expiration date management on the AI-related data based on the certificate (<5> in FIG. 18). Specifically, in the case where an expiration condition indicated by the certificate is met, the AI-related data such as the AI model is authorized to be used; in the case where the expiration condition expressed by the certificate is not met, the AI-related data is prohibited to be used.

A specific method may involve, for example, checking the expiration date before deployment of the AI model and, in the case where the expiration date is passed, not making a request to deploy the AI model.

An alternative method may involve checking the expiration date after making a deploy request and, if the expiration date is passed, not decoding the encoded AI model that has been deployed.

### <5. Summary of embodiments>

As explained above, a signal processing apparatus (signal processing apparatus 5, 5C; signal processing part 5B, 5D) embodying this technology includes an AI processing part (AI processing part 54, DSP 54d) that performs AI processing on an input image by using an AI model, an image processing part (image processing part 53, ISP 53d) capable of selectively acquiring a different type of image as an image based on a captured image input from the outside, a control part (control part 55, ICPU 81, DCPU 82) that controls the settings of the image processing part on the basis of image designation data for designating the image to be obtained by the image processing part and that controls the settings of the AI model for the AI processing part on the basis of AI model designation data for designating the AI model to be set to the AI processing part, and a transmission part (inter-device communication part 51, downstream I/F part 62) that transmits information indicative of the result of the AI processing performed by the AI processing part to the outside.

Configured as described above, the signal processing apparatus as the embodiment causes the AI processing part to perform AI processing on a captured image input from the outside, and allows the transmission part to transmit information indicative of the AI processing result to the outside. Thus, the signal processing apparatus as the embodiment enables an imaging system with no AI processing functions regarding captured images to function as an imaging system equipped with the AI processing functions. As a result, the signal processing apparatus configured as described above makes it possible to selectively set the type of AI processing to be executed by the AI processing part, on the basis of the AI model designation data. Also, by designation based on the image designation data, the signal processing apparatus enables the AI processing part to receive input of the appropriate type of images corresponding to the input image conditions assumed by the AI processing to be carried out.

Consequently, the signal processing apparatus as the embodiment is implemented as a signal processing apparatus capable of adding the AI processing functions to an imaging system without such functions while enhancing the degree of freedom of the AI processing that can be implemented by that imaging system.

Further, in the signal processing apparatus as the embodiment, the image designation data is data that designates contents of the processing by the image processing part corresponding to the AI model designated by the AI model designation data.

This enables the AI processing part to receive input of the appropriate type of images corresponding to the input image conditions assumed for the AI processing to be carried out by the AI processing part.

As a result, the accuracy of AI processing is improved.

Also, the signal processing apparatus as the embodiment allows the image processing part to perform an image format conversion process on a captured image.

When the image processing part is capable of executing the image format conversion process on the captured image as discussed above, different types of AI processing subject to different input image conditions regarding the image format can be performed selectively.

This improves the degree of freedom of the AI processing that can be implemented by the imaging system.

In addition, the signal processing apparatus as the embodiment enables the image processing part to carry out a data size adjustment process on the captured image.

When the image processing part is capable of executing the data size adjustment process on the captured image as discussed above, different types of AI processing subject to different input image conditions regarding the image size, the luminance value bit count, and the like can also be performed selectively.

This also improves the degree of freedom of the AI processing that can be implemented by the imaging system.

Further, the signal processing apparatus as the embodiment includes a first reception part (inter-device communication part 51) that receives a captured image from an external apparatus. The captured image is input to the image processing part via the first reception part. The transmission part transmits the information indicative of the AI processing result to the external apparatus.

In the above configuration, the AI processing part is allowed to perform AI processing on the captured image received from the external apparatus such as an external imaging apparatus, and the information indicative of the AI processing result from the AI processing can be returned to the external apparatus.

Consequently, the imaging apparatus without AI processing functions can be made to function as an imaging apparatus equipped with such functions.

Alternatively, an apparatus serving not as an imaging apparatus but as a fog server can be connected as the above external apparatus. That is, as depicted in FIG. 11, this is a configuration in which the captured image transferred from the imaging apparatus to the fog server is received from the latter and subjected to AI processing, before the AI processing result is returned to the fog server. Such a configuration can also add the AI processing functions to the imaging system without such functions.

As another alternative, a test execution apparatus for doing tests related to AI processing can be connected as the external apparatus, as depicted in FIG. 16. It is thus possible to provide a signal processing apparatus capable of supporting AI processing development tests (e.g., tests on the accuracy and speed of AI processing).

The signal processing apparatus as the embodiment also includes a decoding part (decoder 52) that performs the process of decoding a captured image that has been compression-encoded.

Therefore, even in the case where an external apparatus transmits the captured image in a compression-encoded state to the signal processing apparatus, the signal processing apparatus can decode the compression-encoded captured image for input to the AI processing part.

As a result, appropriate images can be input to the AI processing part.

Further, the signal processing apparatus as the embodiment includes a second reception part (upstream I/F part 61) that receives a captured image from an external image pickup element. It is through the second reception part that the captured image is input to the image processing part.

The above configuration implements the signal processing apparatus in which the AI processing part performs AI processing on the captured image received from the external image pickup element.

Thus, a signal processing chip having the functions as such a signal processing apparatus is placed inside an imaging apparatus without AI processing functions. For example, this signal processing chip may be provided to replace an existing signal processing chip that carries out image signal processing on the captured image output from the image pickup element. This implements an imaging apparatus equipped with the AI processing functions. That is, the AI processing functions can be added to an imaging system without such functions.

Moreover, the signal processing apparatus as the embodiment includes both the first reception part that receives a captured image from an external apparatus and the second reception part that receives a captured image from an external image pickup element.

This makes it possible to implement the signal processing apparatus capable of supporting two cases: one case in which the AI processing functions are added to the imaging apparatus in a form different from an imaging apparatus with no AI processing functions, and the other case in which the AI processing functions are added in an incorporated form to the imaging apparatus without such functions.

Also, in the signal processing apparatus as the embodiment, the AI model designation data and the image designation data are transmitted as encoded data from an external apparatus, with the control part decoding the encoded data received from the external apparatus by use of predetermined key information.

This makes it possible only for the signal processing apparatus as a compatible product having an appropriate encryption key to decode the encoded AI model designation data and image designation data.

As a result, security can be improved, for example, as in the case of any signal processing apparatus as a knockoff product being prevented from fraudulently receiving the service.

Further, a signal processing method embodying this technology is performed by a signal processing apparatus including an AI processing part that performs AI processing on an input image by using an AI model, an image processing part capable of selectively acquiring a different type of image as an image based on a captured image input from the outside, and a transmission part that transmits information indicative of the result of the AI processing performed by the AI processing part to the outside. The method involves causing the signal processing apparatus to control the settings of the image processing part on the basis of image designation data for designating the image to be obtained by the image processing part and to control the settings of the AI model for the AI processing part on the basis of AI model designation data for designating the AI model to be set to the AI processing part.

The signal processing apparatus as the above-described embodiment is implemented by such a signal processing method.

Thus, the signal processing apparatus is implemented to be capable of adding the AI processing functions to an imaging system without such functions while enhancing the degree of freedom of the AI processing that can be implemented by that imaging system.

Further, a data structure embodying this technology is for use by a signal processing apparatus including an AI processing part that performs AI processing on an input image by using an AI model, an image processing part capable of selectively acquiring a different type of image as an image based on a captured image input from the outside, and a transmission part that transmits information indicative of the result of the AI processing performed by the AI processing part to the outside. The data structure includes image designation data for designating the image to be obtained by the image processing part and AI model designation data for designating the AI model to be set to the AI processing part. The data structure is used by the signal processing apparatus in controlling the settings of the image processing part on the basis of the image designation data and the settings of the AI model for the AI processing part on the basis of the AI model designation data (see FIGS. 6, 7 and 9, etc.).

Using the data having the above-described structure makes it possible for the signal processing apparatus as the above-described embodiment to implement its processing.

As a result, the signal processing apparatus can be implemented to be capable of adding the AI processing functions to an imaging system without such functions while enhancing the degree of freedom of the AI processing that can be implemented by that imaging system.

Further, a data generation method embodying this technology involves generating data for use by a signal processing apparatus including an AI processing part that performs AI processing on an input image by using an AI model, an image processing part capable of selectively acquiring a different type of image as an image based on a captured image input from the outside, and a transmission part that transmits information indicative of the result of the AI processing performed by the AI processing part to the outside, the data including image designation data for designating the image to be obtained by the image processing part and AI model designation data for designating the AI model to be set to the AI processing part (see FIGS. 6 and 9, etc.).

Such a data generation method permits generation of the data for allowing the signal processing apparatus as the above-described embodiment to implement its processing.

Consequently, the signal processing apparatus can be implemented to be capable of adding the AI processing functions to an imaging system without such functions while enhancing the degree of freedom of the AI processing that can be implemented by that imaging system.

Another signal processing apparatus (signal processing apparatus 5, 5C) embodying this technology includes an image processing part (image processing part 53) that performs signal processing on a captured image, an AI processing part (AI processing part 54) that performs AI processing by use of an AI model on the captured image processed by the image processing part, a reception part (network communication part 58) that receives from a server apparatus image designation data for designating contents of the processing by the image processing part and AI model designation data for designating the AI model to be set to the AI processing part, a control part (control part 55) that controls the settings of the AI model for the AI processing part on the basis of the AI model designation data and controls the settings of the image processing part on the basis of the image designation data, and a transmission part (inter-device communication part 51) that transmits information indicative of the result of the AI processing performed by the AI processing part to an external imaging apparatus.

The signal processing apparatus configured as described above also enables an imaging apparatus with no AI processing functions to function as an imaging apparatus equipped with the AI processing functions. Further, on the basis of the AI model designation data, the signal processing apparatus permits selective setting of the type of AI processing to be carried out by the AI processing part. Also, by designation based on the image designation data, the signal processing apparatus allows the AI processing part to receive input of an appropriate type of image complying with the input image conditions assumed by the AI processing to be performed.

As a result, the signal processing apparatus can be implemented to be capable of adding the AI processing functions to an imaging apparatus without such functions while enhancing the degree of freedom of the AI processing that can be implemented by an imaging system.

A further signal processing apparatus (signal processing apparatus 5, 5C) embodying this technology includes a first communication part (inter-device communication part 51) capable of communicating with an external imaging apparatus, a second communication part (network communication part 58) capable of communicating with an external server apparatus, and an AI processing part (AI processing part 54) that performs AI processing using an AI model. In the signal processing apparatus, a captured image is received from the imaging apparatus via the first communication part. The AI model is received from the server apparatus via the second communication part. Using the received AI model, the AI processing part performs AI processing on the received captured image. Information indicative of the result of the AI processing performed by the AI processing part is transmitted to the imaging apparatus through the first communication part.

In this manner, an imaging apparatus with no AI processing functions is enabled to function as an imaging apparatus equipped with the AI processing functions. Further, in this case, the AI processing functions can be switched from one function to another depending on the AI model that the server apparatus causes the signal processing apparatus to receive. That is, the degree of freedom of the AI processing that can be implemented by the imaging apparatus can be improved.

Moreover, in the further signal processing apparatus as the embodiment, the imaging apparatus outputs the received information indicative of the AI processing result to the outside via a third communication part.

In this manner, the imaging apparatus is allowed to output the information indicative of the AI processing result to a predetermined external apparatus such as the server apparatus.

Also, in the further signal processing apparatus as the embodiment, the first communication part includes a connector part for connection with the imaging apparatus, the connector part being attachable and detachable to and from a pairing connector part.

The attachable/detachable connector part as described above makes it possible to switch from one imaging apparatus to another to which to add the AI processing functions.

Note that the advantageous effects stated in this description are only examples and are not limitative, and there may be additional advantageous effects.

### <6. Present technology>

The present technology may also be implemented in the following configurations:
(1) A signal processing apparatus including:
   an AI processing part configured to perform AI processing on an input image by using an AI model;
   an image processing part capable of selectively acquiring a different type of image as an image based on a captured image input from an outside;
   a control part configured to control settings of the image processing part on the basis of image designation data for designating an image to be obtained by the image processing part, and to control settings of the AI model for the AI processing part on the basis of AI model designation data for designating an AI model to be set to the AI processing part; and
   a transmission part configured to transmit information indicative of a result of the AI processing performed by the AI processing part to the outside.
(2) The signal processing apparatus according to (1) above, in which the image designation data is data that designates contents of the processing performed by the image processing part corresponding to the AI model designated by the AI model designation data.
(3) The signal processing apparatus according to (1) or (2) above, in which the image processing part is capable of performing an image format conversion process as processing on the captured image.
(4) The signal processing apparatus according to any of (1) to (3) above, in which the image processing part is capable of performing a data size adjustment process as processing on the captured image.
(5) The signal processing apparatus according to any of (1) to (4) above, including:
   a first reception part configured to receive the captured image from an external apparatus,
   in which the image processing part receives input of the captured image via the first reception part, and
   the transmission part transmits the information indicative of the result of the AI processing to the external apparatus.
(6) The signal processing apparatus according to (5) above, including:
   a decoding part configured to perform a decoding process on the captured image that has been compression-encoded.
(7) The signal processing apparatus according to any of (1) to (4) above, including:
   a second reception part configured to receive the captured image from an external image pickup element,
   in which the image processing part receives input of the captured image via the second reception part.
(8) The signal processing apparatus according to any of (1) to (7) above, including both:
   a first reception part configured to receive the captured image from an external apparatus; and
   a second reception part configured to receive the captured image from an external image pickup element.
(9) The signal processing apparatus according to any of (1) to (8) above,
   in which the AI model designation data and the image designation data are transmitted as encoded data from an external apparatus, and
   the control part decodes the encoded data received from the external apparatus by use of predetermined key information.
(10) A signal processing method for execution by a signal processing apparatus including an AI processing part configured to perform AI processing on an input image by using an AI model, an image processing part capable of selectively acquiring a different type of image as an image based on a captured image input from an outside, and a transmission part configured to transmit information indicative of a result of the AI processing performed by the AI processing part to the outside,
   the signal processing method including:
   causing the signal processing apparatus to control settings of the image processing part on the basis of image designation data for designating an image to be obtained by the image processing part, and to control settings of the AI model for the AI processing part on the basis of AI model designation data for designating an AI model to be set to the AI processing part.
(11) A data structure for use by a signal processing apparatus including an AI processing part configured to perform AI processing on an input image by using an AI model, an image processing part capable of selectively acquiring a different type of image as an image based on a captured image input from an outside, and a transmission part configured to transmit information indicative of a result of the AI processing performed by the AI processing part to the outside,
   the data structure including:
   image designation data for designating an image to be obtained by the image processing part; and
   AI model designation data for designating an AI model to be set to the AI processing part,
   in which the signal processing apparatus uses the data structure in controlling settings of the image processing part on the basis of the image designation data and in controlling settings of the AI model for the AI processing part on the basis of the AI model designation data.
(12) A data generation method for generating data for use by a signal processing apparatus including an AI processing part configured to perform AI processing on an input image by using an AI model, an image processing part capable of selectively acquiring a different type of image as an image based on a captured image input from an outside, and a transmission part configured to transmit information indicative of a result of the AI processing performed by the AI processing part to the outside,
   the data including image designation data for designating an image to be obtained by the image processing part and AI model designation data for designating an AI model to be set to the AI processing part.
(13) A signal processing apparatus including:
   an image processing part configured to perform signal processing on a captured image;
   an AI processing part configured to perform AI processing using an AI model on the captured image processed by the image processing part;
   a reception part configured to receive from a server apparatus image designation data for designating contents of the processing performed by the image processing part and AI model designation data for designating an AI model to be set to the AI processing part;
   a control part configured to control settings of the AI model for the AI processing part on the basis of the AI model designation data and to control settings of the image processing part on the basis of the image designation data; and
   a transmission part configured to transmit information indicative of a result of the AI processing performed by the AI processing part to an external imaging apparatus.
(14) A signal processing apparatus including:
   a first communication part capable of communicating with an external imaging apparatus;
   a second communication part capable of communicating with an external server apparatus; and
   an AI processing part configured to perform AI processing using an AI model,
   in which a captured image is received from the imaging apparatus via the first communication part,
   the AI model is received from the server apparatus via the second communication part,
   the AI processing part performs the AI processing on the received captured image by using the received AI model, and
   information indicative of a result of the AI processing performed by the AI processing part is transmitted to the imaging apparatus via the first communication part.
(15) The signal processing apparatus according to (14) above, in which the imaging apparatus outputs the received information indicative of the result of the AI processing to an outside via a third communication part.
(16) The signal processing apparatus according to (14) or (15) above, in which the first communication part includes a connector part for connection with the imaging apparatus, the connector part being attachable and detachable to and from a pairing connector part.

### [Reference Signs List]

100, 100A, 100B: Information processing system
1, 1B: Server apparatus
2: User terminal
3, 3B: Camera
4, 4A, 4B: Fog server
5, 5C: Signal processing apparatus
5B: Signal processing part
F1: License authorization function
F2: Account service function
F3: Marketplace function
F4: AI service function
31: Image sensor
32: Camera control part
33: Communication part
35: Different sensor
51: Inter-device communication part
52: Decoder
53: Image processing part
54: AI processing part
55: Control part
56: Memory part
57: Nonvolatile memory part
58: Network communication part
59: Bus
Ik: Key information
Da: AI model designation data
Dp: Image designation data
61: Upstream I/F part
62: Downstream I/F part
53d: ISP
54d: DSP
81: ICPU
82: DCPU

## Claims

1. A signal processing apparatus comprising:
an AI processing part configured to perform AI processing on an input image by using an AI model;
an image processing part capable of selectively acquiring a different type of image as an image based on a captured image input from an outside;
a control part configured to control settings of the image processing part on a basis of image designation data for designating an image to be obtained by the image processing part, and to control settings of the AI model for the AI processing part on a basis of AI model designation data for designating an AI model to be set to the AI processing part; and
a transmission part configured to transmit information indicative of a result of the AI processing performed by the AI processing part to the outside.

2. The signal processing apparatus according to claim 1, wherein the image designation data is data that designates contents of the processing performed by the image processing part corresponding to the AI model designated by the AI model designation data.
The signal processing apparatus according to (1) above.

3. The signal processing apparatus according to claim 1, wherein the image processing part is capable of performing an image format conversion process as processing on the captured image.

4. The signal processing apparatus according to claim 1, wherein the image processing part is capable of performing a data size adjustment process as processing on the captured image.

5. The signal processing apparatus according to claim 1, comprising:
a first reception part configured to receive the captured image from an external apparatus,
wherein the image processing part receives input of the captured image via the first reception part, and
the transmission part transmits the information indicative of the result of the AI processing to the external apparatus.

6. The signal processing apparatus according to claim 5, comprising:
a decoding part configured to perform a decoding process on the captured image that has been compression-encoded.

7. The signal processing apparatus according to claim 1, comprising:
a second reception part configured to receive the captured image from an external image pickup element,
wherein the image processing part receives input of the captured image via the second reception part.

8. The signal processing apparatus according to claim 1, comprising both:
a first reception part configured to receive the captured image from an external apparatus; and
a second reception part configured to receive the captured image from an external image pickup element.

9. The signal processing apparatus according to claim 1,
wherein the AI model designation data and the image designation data are transmitted as encoded data from an external apparatus, and
the control part decodes the encoded data received from the external apparatus by use of predetermined key information.

10. A signal processing method for execution by a signal processing apparatus including an AI processing part configured to perform AI processing on an input image by using an AI model, an image processing part capable of selectively acquiring a different type of image as an image based on a captured image input from an outside, and a transmission part configured to transmit information indicative of a result of the AI processing performed by the AI processing part to the outside,
the signal processing method comprising:
causing the signal processing apparatus to control settings of the image processing part on a basis of image designation data for designating an image to be obtained by the image processing part, and to control settings of the AI model for the AI processing part on a basis of AI model designation data for designating an AI model to be set to the AI processing part.

11. A data structure for use by a signal processing apparatus including an AI processing part configured to perform AI processing on an input image by using an AI model, an image processing part capable of selectively acquiring a different type of image as an image based on a captured image input from an outside, and a transmission part configured to transmit information indicative of a result of the AI processing performed by the AI processing part to the outside,
the data structure comprising:
image designation data for designating an image to be obtained by the image processing part; and
AI model designation data for designating an AI model to be set to the AI processing part,
wherein the signal processing apparatus uses the data structure in controlling settings of the image processing part on a basis of the image designation data and in controlling settings of the AI model for the AI processing part on a basis of the AI model designation data.

12. A data generation method for generating data for use by a signal processing apparatus including an AI processing part configured to perform AI processing on an input image by using an AI model, an image processing part capable of selectively acquiring a different type of image as an image based on a captured image input from an outside, and a transmission part configured to transmit information indicative of a result of the AI processing performed by the AI processing part to the outside,
the data including image designation data for designating an image to be obtained by the image processing part and AI model designation data for designating an AI model to be set to the AI processing part.

13. A signal processing apparatus comprising:
an image processing part configured to perform signal processing on a captured image;
an AI processing part configured to perform AI processing using an AI model on the captured image processed by the image processing part;
a reception part configured to receive from a server apparatus image designation data for designating contents of the processing performed by the image processing part and AI model designation data for designating an AI model to be set to the AI processing part;
a control part configured to control settings of the AI model for the AI processing part on a basis of the AI model designation data and to control settings of the image processing part on a basis of the image designation data; and
a transmission part configured to transmit information indicative of a result of the AI processing performed by the AI processing part to an external imaging apparatus.

14. A signal processing apparatus comprising:
a first communication part capable of communicating with an external imaging apparatus;
a second communication part capable of communicating with an external server apparatus; and
an AI processing part configured to perform AI processing using an AI model,
wherein a captured image is received from the imaging apparatus via the first communication part,
the AI model is received from the server apparatus via the second communication part,
the AI processing part performs the AI processing on the received captured image by using the received AI model, and
information indicative of a result of the AI processing performed by the AI processing part is transmitted to the imaging apparatus via the first communication part.

15. The signal processing apparatus according to claim 14, wherein the imaging apparatus outputs the received information indicative of the result of the AI processing to an outside via a third communication part.

16. The signal processing apparatus according to claim 14, wherein the first communication part includes a connector part for connection with the imaging apparatus, the connector part being attachable and detachable to and from a pairing connector part.
